# EUROPEAN PATENT SPECIFICATION

(11) **EP 4 437 756 B1**
(45) Date of publication and mention of the grant of the patent: **05.08.2026**
(21) Application number: 22897878.9
(22) Date of filing: 24.11.2022
(51) Int. Cl.: H04W 28/00

(54) **NETWORK NODE, USER EQUIPMENT, AND METHODS THEREIN FOR COMMUNICATION IN EDGEAPP**
NETZWERKKNOTEN, BENUTZERGERÄT UND VERFAHREN DARIN ZUR KOMMUNIKATION IN EDGEAPP
NOEUD DE RÉSEAU, ÉQUIPEMENT UTILISATEUR ET PROCÉDÉS ASSOCIÉS POUR COMMUNICATION DANS UNE APPLICATION DE BORD

(30) Priority: 25.11.2021 WO PCT/CN2021/133108
(43) Date of publication of application: 02.10.2024
(73) Proprietor: Telefonaktiebolaget LM Ericsson (publ), 164 83 Stockholm (SE)
(72) Inventor: ZHANG, Yun, Guangzhou Guangdong 510630 (CN); ZHANG, Fengpei, Guangzhou Guangdong 510630 (CN)
(74) Representative: Murgitroyd & Company
(86) International application number: PCT/CN2022/133966
(87) International publication number: WO 2023/093795

(56) References cited:
- WO-A1-2021/138069
- WO-A1-2021/169942
- WO-A1-2021/204432
- CN-A- 108 989 372
- CN-A- 111 629 401
- US-A1- 2021 037 584
- US-A1- 2021 111 953
- 3GPP TECHNICAL SPECIFICATION GROUP CORE NETWORK AND TERMINALS, 3GPP TS 29122-H30, 3GPP TSG_CT\WG3_INTERWORKING_EX-CN3, 23 September 2021 (2021-09-23), XP052056125

## Description

### TECHNICAL FIELD

The present disclosure relates to communication technology, and more particularly, to a network node, a User Equipment (UE), and methods therein for communication in the 3^{rd} Generation Partnership Project (3GPP) Architecture for enabling Edge Applications (EDGEAPP).

### BACKGROUND

Edge computing is a mechanism that enables services to be hosted close to service consumers and provides benefits such as efficient service delivery with significant reduction in end-to-end latency and decreased load on the transport network. The benefits of edge computing can strengthen the promise of the 5^{th} Generation (5G) communication and expand the prospects for several new and enhanced use cases including virtual and augmented reality, Internet of Things (IoT), Industrial loT, autonomous driving, and real-time multiplayer gaming, etc.

Release 17 of 3GPP aims to provide native support for edge computing in 3GPP networks. These efforts include initiatives across several working groups in 3GPP including Service and System Aspects (SA) 6, SA2, SA3, SA4, and SA5, which cover application layer architecture, core network enhancement, security, media processing, and management aspects, respectively.

SA6 initiated normative specification work on the architecture for enabling Edge Applications (EDGEAPP). The objective of the work is to define an enabling layer to facilitate communication between one or more Application Clients (ACs) running on a User Equipment (UE), and one or more Edge Application Servers (EASs) deployed on an Edge Data Network (EDN). This includes aspects of service provisioning and EAS discovery. In addition, the work aims to provide support services such as application context transfer between EASs for service continuity, service enablement, and capability exposure Application Programming Interfaces (APIs) towards the EASs.

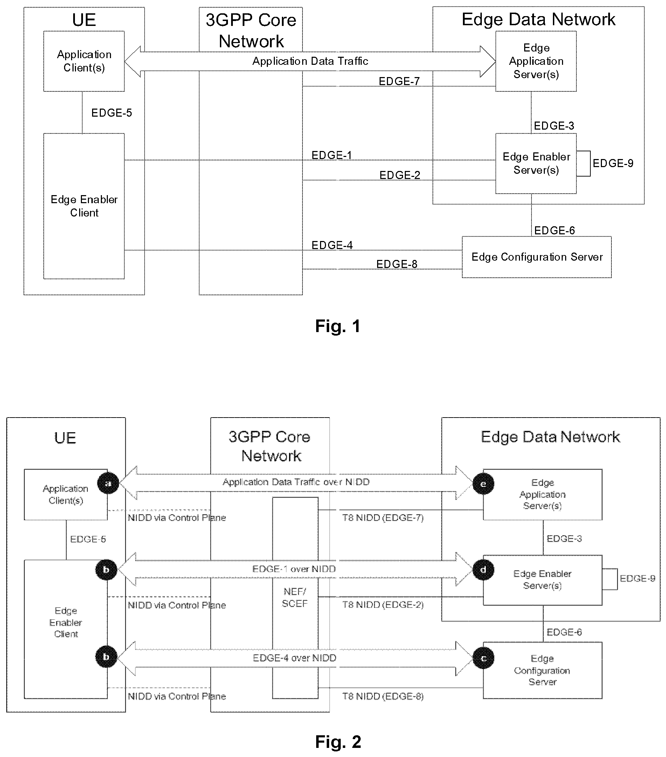

Fig. 1 illustrates an exemplary architecture of EDGEAPP. The EDGEAPP architecture can be used by different vertical applications, such as factories, smart cities, and logistics. The architecture includes the following functional entities:
● Edge Enabler Server (EES): An EES provides supporting functions needed for one or more EASs and an Edge Enabler Client (EEC), e.g., EEC registration, EAS discovery, network APIs for one or more EASs, and service continuity support.
● EEC: An EEC provides supporting functions needed for one or more ACs, e.g., retrieval and provisioning of configuration information to enable application data transfer and EAS discovery.
● Edge Configuration Server (ECS): An ECS provides supporting functions needed for an EEC to connect with one or more EESs, e.g., provisioning of edge configuration information to the EEC, and EES discovery.
● AC: An AC is an application resident in an UE performing the client functions.
● EAS: An EAS is an application server resident in an EDN performing the server functions. The AC(s) may connect to the EAS(s) and transmit/receive application data traffic to/from the EAS(s) in order to avail the services of the application with the benefits of edge computing.

Fig. 1 also shows reference points (or interfaces) between the functional entities, including e.g.:
EDGE-1 between the EEC and the EES(s);
EDGE-2 between the 3GPP core network (e.g., a Network Exposure Function (NEF) or Service Capability Exposure Function (SCEF) deployed in it) and the EES(s);
EDGE-3 between the EAS(s) and the EES(s);
EDGE-4 between the EEC and the ECS;
EDGE-5 between the AC(s) and the EEC;
EDGE-6 between the EES(s) and the ECS;
EDGE-7 between the 3GPP core network and the EAS(s);
EDGE-8 between the 3GPP core network and the ECS; and
EDGE-9 between the EES(s).

For further details of the above functional entities and reference points, reference can be made to the 3GPP Technical Specification (TS), 23.558, V17.1.0, which is incorporated herein by reference in its entirety.

US20210111953A1 describes a method carried out at a UE, the method including transmitting, via a wireless communications network to an edge server of an edge data network, a request for edge information (e.g., a request for edge data network information or a request for edge application server information), the request including at least a first indication of a first geographical area in which the UE is currently located and a second indication of a second geographical area in which the UE is expected to be located in the future and receiving, from the edge server, a response that provides a set of edge data network configurations and, for each edge data network configuration, an associated geographical area of operation for the edge data network configuration.

### SUMMARY

In the EDGEAPP architecture shown in Fig. 1, all reference points between the UE and an Edge Enablement Layer (EEL) are based on Hyper Text Transfer Protocol (HTTP), which may be too complicated, especially for constrained devices that require low power consumption. Instead of HTTP, Constrained Application Protocol (CoAP) over Non-Internet Protocol (IP) Data Delivery (NIDD) (NIDD is carried out through control plane) may be more suitable for constrained devices.

It is an object of the present disclosure to provide a network node, a UE, and methods therein for enabling NIDD in EDGEAPP.

According to a first aspect of the present disclosure, a method in a management function is provided. The method includes: transmitting, to an NEF or an SCEF, an NIDD configuration request indicating an NIDD Reliable Data Service (RDS) port for an EEC, an NIDD RDS port for an ECS, and an NIDD notification destination for the ECS; receiving, from the NEF or SCEF, an NIDD configuration response; and transmitting, to the EEC, ECS configuration information indicating the NIDD RDS port for the ECS.

According to a second aspect of the present disclosure, a method in an EEC, is provided. The method includes: receiving, from a management function, ECS configuration information indicating an NIDD RDS port for an ECS.

In an embodiment, the method may further include: transmitting, to the ECS over NIDD using the NIDD RDS port for the ECS, a service provisioning request indicating an UE transport type of NIDD and an NIDD RDS port for the EEC; and receiving, from the ECS over NIDD, a service provisioning response indicating, for each of one or more EESs, an NIDD RDS port.

In an embodiment, the method may further include: transmitting, to the ECS over NIDD using the NIDD RDS port for the ECS, a select EES request indicating an EES identifier of an EES selected from the one or more EESs; and receiving, from the ECS over NIDD, a select EES response.

In an embodiment, the method may further include: transmitting, to the selected EES over NIDD using the NIDD RDS port for the selected EES, an EEC registration request indicating the UE transport type of NIDD and the NIDD RDS port for the EEC; and receiving, from the selected EES over NIDD, an EEC registration response.

In an embodiment, the EEC registration request may further indicate an NIDD RDS port for an AC.

In an embodiment, the method may further include: transmitting, to the selected EES over NIDD using the NIDD RDS port for the selected EES, an EAS discovery request; and receiving, from the selected EES over NIDD, an EAS discovery response indicating, for each of one or more EASs, an NIDD RDS port.

In an embodiment, the method may further include: transmitting, to the selected EES over NIDD using the NIDD RDS port for the selected EES, a select EAS request indicating an EAS identifier for an EAS selected from the one or more EASs; and receiving, from the selected EES over NIDD, a select EAS response.

In an embodiment, the method may further include: transmitting, to the AC, an NIDD RDS port for the selected EAS.

According to a third aspect of the present disclosure, a method in an AC is provided. The method includes: receiving, from an EEC, an NIDD RDS port for an Edge Application Server, EAS; and transmitting application data to the EAS over NIDD using the NIDD RDS port for the EAS.

According to a fourth aspect of the present disclosure, a method in an ECS is provided. The method includes: receiving, from an EES, an EES registration request indicating an NIDD RDS port for the EES and an NIDD notification destination for the EES; and transmitting, to the EES, an EES registration response.

In an embodiment, the method may further include: receiving, from an EEC, over NIDD, a service provisioning request indicating an UE transport type of NIDD and an NIDD RDS port for the EEC; and transmitting, to the EEC over NIDD using the NIDD RDS port for the EEC, a service provisioning response indicating, for each of one or more EESs, an NIDD RDS port.

In an embodiment, the method may further include: receiving, from the EEC over NIDD, a select EES request indicating an EES identifier of an EES selected from the one or more EESs; transmitting, to an NEF or an SCEF, an NIDD configuration request indicating an NIDD RDS port for the EEC, an NIDD RDS port for the selected EES, and an NIDD notification destination for the selected EES; receiving, from the NEF or SCEF, an NIDD configuration response; and transmitting, to the EEC, a select EES response.

According to a fifth aspect of the present disclosure, a method in an EES is provided. The method includes: transmitting, to an ECS, an EES registration request indicating an NIDD RDS port for the EES and an NIDD notification destination for the EES; receiving, from the ECS, an EES registration response.

In an embodiment, the method may further include: receiving, from an EAS, an EAS registration request indicating an EAS transport type of NIDD, an NIDD RDS port for the EAS, and an NIDD notification destination for the EAS; and transmitting, to the EAS, an EAS registration response.

In an embodiment, the method may further include: receiving, from an EEC over NIDD, an EEC registration request indicating an UE transport type of NIDD and an NIDD RDS port for the EEC; and transmitting, to the EEC, an EEC registration response.

In an embodiment, the EEC registration request further indicates an NIDD RDS port for an AC.

In an embodiment, the method may further include: receiving, from the EEC over NIDD, an EAS discovery request indicating an EEC identifier for the EEC; and transmitting, to the EEC over NIDD, an EAS discovery response indicating, for each of one or more EASs, an NIDD RDS port.

In an embodiment, the method may further include: receiving, from the EEC over NIDD, a select EAS request indicating a EAS identifier for an EAS selected from the one or more EASs; transmitting, to an NEF or an SCEF, an NIDD configuration request indicating an NIDD RDS port for an AC, an NIDD RDS port for the EAS, and an NIDD notification destination for the EAS; receiving, from the NEF or SCEF, an NIDD configuration response; and transmitting, to the EEC over NIDD, a select EAS response.

According to a sixth aspect of the present disclosure, a method in an EAS is provided. The method includes: transmitting, to an EES, an EAS registration request indicating an EAS transport type of NIDD, an NIDD RDS port for the EAS, and an NIDD notification destination for the EAS; and receiving, from the EES, an EAS registration response.

According to a seventh aspect of the present disclosure, a method in an NEF or an SCEF is provided. The method includes: receiving, from a management function, an NIDD configuration request indicating an NIDD RDS port for an EEC, an NIDD RDS port for an ECS, and an NIDD notification destination for the ECS; and transmitting, to the management function, an NIDD configuration response.

In an embodiment, the method may further include: receiving, from the ECS, an NIDD configuration request indicating the NIDD RDS port for the EEC, an NIDD RDS port for the EES, and an NIDD notification destination for the EES; and transmitting, to the ECS, an NIDD configuration response.

In an embodiment, the method may further include: receiving, from the EES, an NIDD configuration request indicating an NIDD RDS port for an AC, an NIDD RDS port for the EAS, and an NIDD notification destination for the EAS; and transmitting, to the ECS, an NIDD configuration response.

According to an eighth aspect of the present disclosure, a method in a source EES is provided. The method includes: transmitting, to an NEF or an SCEF in response to a decision of Application Context Relocation (ACR), a first NIDD configuration request indicating an NIDD RDS port for an EEC, an NIDD RDS port for a target EES, and an NIDD notification destination for the target EES; and receiving, from the NEF/SCEF, a first NIDD configuration response indicating a first configuration identifier of a first NIDD configuration created in response to the first NIDD configuration request.

In an embodiment, the method may further include: transmitting, to the NEF/SCEF, a second NIDD configuration request indicating an NIDD RDS port for an AC, an NIDD RDS port for a target EAS, and an NIDD notification destination for the target EAS; and receiving, from the NEF/SCEF, a second NIDD configuration response indicating a second configuration identifier of a second NIDD configuration created in response to the second NIDD configuration request.

In an embodiment, the method may further include when the ACR has been completed: transmitting, to the NEF/SCEF, a request for removing a third NIDD configuration for NIDD communication between the EEC and the source EES, the request indicating a third configuration identifier of the third NIDD configuration; and receiving, from the NEF/SCEF, a response indicating removal of the third NIDD configuration.

In an embodiment, the method may further include, when the ACR has been completed: transmitting, to the NEF/SCEF, a request for removing a fourth NIDD configuration for NIDD communication between the AC and a source EAS, the request indicating a fourth configuration identifier of the fourth NIDD configuration; and receiving, from the NEF/SCEF, a response indicating removal of the fourth NIDD configuration.

According to a ninth aspect of the present disclosure, a method in an NEF or an SCEF is provided. The method includes: receiving, from a source EES, a first NIDD configuration request indicating an RDS port for an EEC, an NIDD RDS port for a target EES, and an NIDD notification destination for the target EES; and transmitting, to the source EES, a first NIDD configuration response indicating a first configuration identifier of a first NIDD configuration created in response to the first NIDD configuration request.

In an embodiment, the method may further include: receiving, from the source EES, a second NIDD configuration request indicating an NIDD RDS port for an AC, an NIDD RDS port for a target EAS, and an NIDD notification destination for the target EAS; and transmitting, to the source EES, a second NIDD configuration response indicating a second configuration identifier of a second NIDD configuration created in response to the second NIDD configuration request.

According to a tenth aspect of the present disclosure, a network node is provided. The network node includes a communication interface, a processor and a memory. The memory includes instructions executable by the processor whereby the network node is operative to, when implementing a management function, perform the method according to the first aspect, or when implementing an ECS, perform the method according to the fourth aspect, or when implementing an EES, perform the method according to the fifth aspect, or when implementing an EAS, perform the method according to the sixth aspect, or when implementing an NEF or an SCEF, perform the method according to the seventh aspect or the ninth aspect, or when implementing a source EES, perform the method according to the eighth aspect.

According to an eleventh aspect of the present disclosure, a computer-readable storage medium is provided. The computer-readable storage medium has computer-readable instructions stored thereon. The computer-readable instructions, when executed by a processor of a network node, configure the network node to, when implementing a management function, perform the method according to the first aspect, or when implementing an ECS, perform the method according to the fourth aspect, or when implementing an EES, perform the method according to the fifth aspect, or when implementing an EAS, perform the method according to the sixth aspect, or when implementing an NEF or an SCEF, perform the method according to the seventh aspect or the ninth aspect, or when implementing a source EES, perform the method according to the eighth aspect.

According to a twelfth aspect of the present disclosure, a UE is provided. The UE includes a communication interface, a processor and a memory. The memory includes instructions executable by the processor whereby the UE is operative to, when implementing an EEC, perform the method according to the second aspect, or when implementing an AC, perform the method according to the third aspect.

According to a thirteenth aspect of the present disclosure, a computer-readable storage medium is provided. The computer-readable storage medium has computer-readable instructions stored thereon. The computer-readable instructions, when executed by a processor of a UE, configure the UE to, when implementing an EEC, perform the method according to the second aspect, or when implementing an AC, perform the method according to the third aspect.

With the embodiments of the present disclosure, NIDD can be enabled in EDGEAPP. In particular, the support of NIDD can be provided over some reference points and/or in some procedures in EDGEAPP, thereby reducing complexity and saving power consumption of a UE.

### BRIEF DESCRIPTION OF THE DRAWINGS

The above and other objects, features and advantages will be more apparent from the following description of embodiments with reference to the figures, in which:
- Fig. 1: illustrates an exemplary architecture of EDGEAPP;
- Fig. 2: illustrates a RDS port scheme in EDGEAPP according to an embodiment of the present disclosure;
- Fig. 3: is a flowchart illustrating a method in a management function according to an embodiment of the present disclosure;
- Fig. 4: is a sequence chart illustrating an ECS discovery procedure according to an embodiment of the present disclosure;
- Fig. 5: is a flowchart illustrating a method in an EEC according to an embodiment of the present disclosure;
- Fig. 6: is a sequence chart illustrating a service provisioning procedure according to an embodiment of the present disclosure;
- Fig. 7: is a sequence chart illustrating an EEC registration procedure according to an embodiment of the present disclosure;
- Fig. 8: is a sequence chart illustrating an EAS discovery procedure according to an embodiment of the present disclosure;
- Fig. 9: is a flowchart illustrating a method in an AC according to an embodiment of the present disclosure;
- Fig. 10: is a flowchart illustrating a method in an ECS according to an embodiment of the present disclosure;
- Fig. 11: is a sequence chart illustrating an EES registration procedure according to an embodiment of the present disclosure;
- Fig. 12: is a flowchart illustrating a method in an EES according to an embodiment of the present disclosure;
- Fig. 13: is a sequence chart illustrating an EAS registration procedure according to an embodiment of the present disclosure;
- Fig. 14: is a flowchart illustrating a method in an EAS according to an embodiment of the present disclosure;
- Fig. 15: is a flowchart illustrating a method in an NEF or SCEF according to an embodiment of the present disclosure;
- Fig. 16: is a sequence chart illustrating an end-to-end procedure for NIDD communication in EDGEAPP according to an embodiment of the present disclosure;
- Fig. 17: is a flowchart illustrating a method in an EES according to an embodiment of the present disclosure;
- Fig. 18: is a sequence chart illustrating a procedure for removing NIDD configuration according to an embodiment of the present disclosure;
- Fig. 19: is a flowchart illustrating a method in an NEF or SCEF according to an embodiment of the present disclosure;
- Fig. 20: is a sequence chart illustrating an ACR procedure according to an embodiment of the present disclosure;
- Fig. 21: is a block diagram of a network node according to an embodiment of the present disclosure;
- Fig. 22: is a block diagram of a network node according to another embodiment of the present disclosure; and
- Fig. 23: is a block diagram of a UE according to an embodiment of the present disclosure;
- Fig. 24: is a block diagram of a UE according to another embodiment of the present disclosure; and
- Fig. 25: is a block diagram of a UE according to yet another embodiment of the present disclosure.

### DETAILED DESCRIPTION

The term "UE" as used herein refers to any end device that can access a communication network and receive services therefrom. A "UE" may not necessarily have a "user" in the sense of a human user who owns and/or operates the relevant device. In some embodiments, a UE may be configured to transmit and/or receive information without direct human interaction. For instance, a UE may support device-to-device (D2D) communication, for example by implementing a 3GPP standard for sidelink communication. As another example, in an Internet of Things (IOT) scenario, a UE may represent a machine or other device that performs monitoring and/or measurements, and transmits the results of such monitoring and/or measurements to another UE and/or network node.

As used herein, a network function can be implemented either as a network element on a dedicated hardware, as a software instance running on a dedicated hardware, or as a virtualized function instantiated on an appropriate platform, e.g. on a cloud infrastructure.

In the following, references in the specification to "one embodiment", "an embodiment", "an example embodiment" and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the associated listed terms. The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

In the following description and claims, unless defined otherwise, all technical and scientific terms used herein have the same meaning as commonly understood by one of ordinary skills in the art to which this disclosure belongs.

In IP communication, an EEC can communicate with an ECS/EES/EAS by knowing a Uniform Resource Identifier (URI)/IP address of the endpoint from a discovery procedure. In Non-IP communication, an NIDD configuration between the EEC and the ECS/EES/EAS is the prerequisite of the communication. The 3GPP TS 24.250, V17.0.0, which is incorporated herein by reference in its entirety, introduces RDS to NIDD. The RDS protocol supports the following requirements:
- RDS supports peer-to-peer data transfers and shall provide reliable data delivery between a UE and an SCEF or Packet Data Network (PDN) Gateway (P-GW). The data is transferred via a PDN connection between the UE and the SCEF or P-GW.
- A UE can connect to multiple SCEFs or P-GWs. A UE can connect to multiple SCSs/ASs via the SCEF(s) or P-GW(s).
- RDS shall support multiple applications on the UE to simultaneously conduct data transfers with their peer entities on the SCEF or P-GW using a single PDN connection between the UE and the SCEF or P-GW.
- RDS shall support both acknowledged and unacknowledged data transfers.
- RDS shall support variable-length frames and shall allow detection and elimination of duplicate frames at the receiving endpoint.

By using RDS in NIDD, an EEC can communicate with multiple functional entities (e.g., ECS/EES/EAS) in EDGEAPP.

Fig. 2 illustrates an exemplary RDS port scheme in EDGEAPP according to an embodiment of the present disclosure. As shown in Fig. 2, the RDS port scheme is as follows:
● a UE allocates two types of ports for edge communication: an NIDD RDS port 'a' for an AC; and an NIDD RDS port 'b' for an EEC;
● an ECS uses 'c' as an SCEF/NEF RDS port;
● an EES uses 'd' as an SCEF/NEF RDS port; and
● an EAS uses 'e' as an SCEF/NEF RDS port.

With the RDS port scheme, the RDS port pairs in NIDD configurations are as follows:
● Application Data Traffic between the AC and the EAS: uePort=a, scefPort(nefPort)=e;
● EDGE-1 reference point between the EEC and the EES: uePort=b, scefPort(nefPort)=d; and
● EDGE-4 reference point between the EEC and the ECS: uePort=b, scefPort(nefPort)=c.

Here, it is to be noted that, if the UE contains more than one AC, it is up to the UE whether to allocate a port for each of the ACs. In addition, the EEL may provide a mechanism to avoid port conflict between different functional entities.

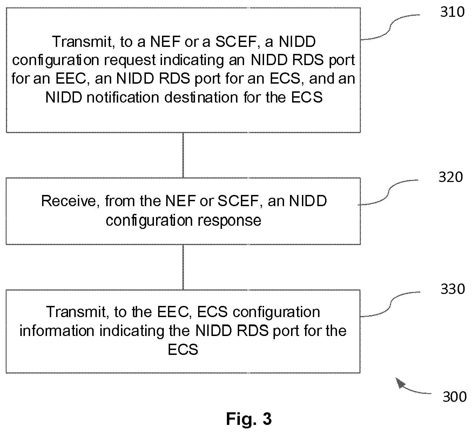

In the following, procedures for enabling NIDD communication between a UE (including an AC and an EEC) and network nodes (including an EAS, an EEC, and an ECS), will be described in detail with reference to Figs. 3-16.

Fig. 3 is a flowchart illustrating a method 300 according to an embodiment of the present disclosure. The method can be performed by e.g., a management function.

At block 310, an NIDD configuration request is transmitted to an NEF or an SCEF. The NIDD configuration request indicates an NIDD RDS port for an EEC, an NIDD RDS port for an ECS, and an NIDD notification destination for the ECS.

At block 320, an NIDD configuration response is received from the NEF or SCEF.

At block 330, ECS configuration information is transmitted to the EEC. The ECS configuration information indicates the NIDD RDS port for the ECS.

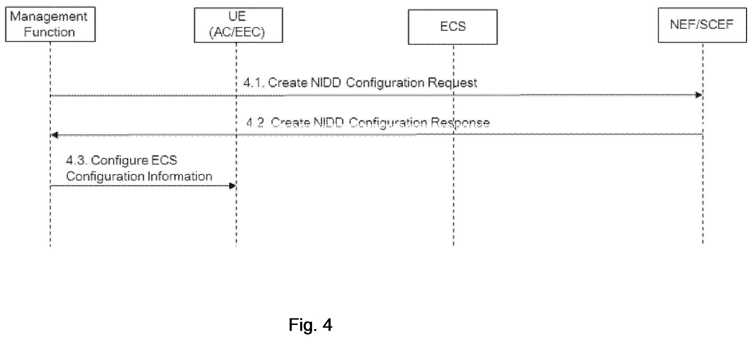

The above method 300 will be further explained with reference to Fig. 4, which illustrates an ECS discovery procedure according to an embodiment of the present disclosure. As shown, at 4.1, a management function calls an NEF/SCEF to create an NIDD Configuration to enable NIDD communication between an EEC and an ECS by transmitting an NIDD configuration request to the NEF/SCEF. The NIDD configuration request may include an identifier (ID) of the management function as a Service Capability Server / Application Server (SCS/AS) (e.g., scsAsld), an identifier of a UE hosting the EEC (e.g., Mobile Subscriber International Integrated Services Digital Network (ISDN) number (MSISDN)/externalld), an NIDD RDS port for the EEC (rdsPort.portUE=EEC NIDD RDS port), an NIDD RDS port for the ECS (rdsPort.portSCEF=ECS NIDD RDS port), and an ECS NIDD notification destination. At 4.2, the management function receives a successful response from the NEF/SCEF. At 4.3, the management function configures the ECS configuration to the EEC or AC by transmitting the ECS configuration information to the EEC or AC, e.g., in a pre-configuration. Here, a new information element, 'ECS NIDD RDS Port', is introduced to the ECS configuration information, as shown in Table 1 below.

**Table 1. ECS Configuration Information**

| **Information element** | **Status** | **Description** |
|---|---|---|
| ECS address | M | One or more URLs and/or IP Address(es) of ECS(s) |
| ECS Provider Identifier | O | The identifier of the ECS Provider(s) |
| ECS NIDD RDS Port | O | When UE Transport is NIDD, this port is used by EEC/AC for communication. |

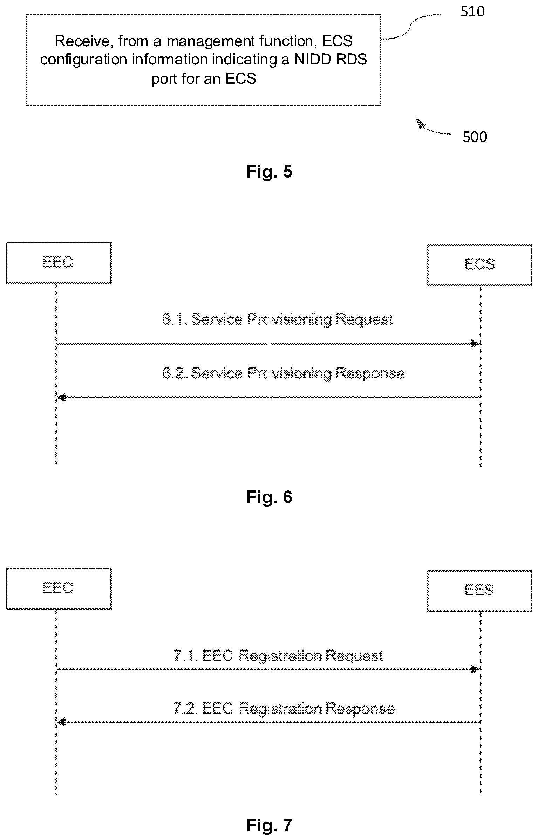

Fig. 5 is a flowchart illustrating a method 500 according to an embodiment of the present disclosure. The method can be performed by e.g., an EEC.

At block 510, ECS configuration information is received from a management function. The ECS configuration information indicates an NIDD RDS port for an ECS. For further details of the ECS configuration information, reference can be made to Step 4.3 of Fig. 4 as described above.

In an example, a service provisioning request may be transmitted to the ECS over NIDD using the NIDD RDS port for the ECS received in the block 510. The service provisioning request may indicate a UE transport type of NIDD and an NIDD RDS port for the EEC. Then, a service provisioning response may be received from the ECS over NIDD. The service provisioning response indicates, for each of one or more EESs, an NIDD RDS port and an NIDD notification destination.

The service provisioning request and the service provisioning response will be further explained with reference to Fig. 6, which illustrates a service provisioning procedure according to an embodiment of the present disclosure. As shown, at 6.1, an EEC may send a service provisioning request to an ECS. The service provisioning request may include an identifier (ID) of the EEC (e.g., EECID), security credentials of the EEC, a UE transport type of NIDD (e.g., UE Transport=nidd), and/or an NIDD RDS port for the EEC (e.g., EEC NIDD RDS Port=b), and an AC profile. Details of the information elements in the service provisioning request are shown in Table 2 below.

**Table 2. Service Provisioning Request**

| **Information element** | **Status** | **Description** |
|---|---|---|
| EECID | M | Unique identifier of the EEC. |
| UE Transport | M | The transport protocol UE uses for communication |
| EEC NIDD RDS Port | O | When UE Transport is NIDD, this port is used by EEC for communication |
| Security credentials | M | Security credentials resulting from a successful authorization for the edge computing service. |
| AC Profile(s) | O | Information about services the EEC wants to connect to, as described in Table 8.2.2-1 of TS 23.558. |
| EEC Service Continuity Support | O | Indicates if the EEC supports service continuity or not. The IE also indicates which ACR scenarios are supported by the EEC. |
| UE Identifier | O | The identifier of the UE (i.e. GPSI or identity token) |
| Connectivity information | O | List of connectivity information for the UE, e.g. PLMN ID, SSID. |
| UE location | O | The location information of the UE. The UE location is described in clause 7.3.2 of TS 23.558. |

The AC Profile may be extended to include an NIDD RDS port for an AC (e.g., AC NIDD RDS Port=a). Details of the information elements in the AC profile are shown in Table 3 below.

**Table 3. AC Profile**

| **Information element** | **Status** | **Description** |
|---|---|---|
| ACID | M | Identity of the AC. |
| AC Type | O | The category or type of AC (e.g. V2X). This is an implementation specific value. |
| AC NIDD RDS Port | O | When UE Transport is NIDD, this port is used by AC for communication |
| Preferred ECSP list | O | When used in a service provisioning request, this IE indicates to the ECS which ECSPs are preferred for the AC. The ECS may use this information in the selection of EESs. |
| AC Schedule | O | The expected operation schedule of the AC (e.g. time windows) |
| Expected AC Geographical Service Area | O | The expected location(s) (e.g. route) of the hosting UE during the AC's operation schedule. This geographic information can express a geographic point, polygon, route, signalling map, or wavpoint set. |
| AC Service Continuity Support | O | Indicates if service continuity support is required or not for the application. The IE also indicates which ACR scenarios are supported by the AC and which of these are preferred by the AC. |
| List of EASs | O | List of EAS that serve the AC along with the service KPIs required by the AC |
| > EASID | M | Identifier of the EAS |
| > Expected AC Service KPIs | O | KPIs expected in order for ACs to receive currently required services from the EAS, as described in Table 8.2.3-1 of TS 23.558 |
| > Minimum required AC Service KPIs | O | Minimum KPIs required in order for ACs to receive meaningful services from the EAS, as described in Table 8.2.3-1 of TS 23.558 |

At 6.2, the ECS responds to the EEC's request with a service provisioning response. The service provisioning response may include a list of EDN configuration information, e.g., an identifier of the EDN, an EDN service area, required information (e.g. an URI, an IP address) for establishing a connection to an EES, an NIDD RDS port for the EES (e.g., EES NIDD RDS Port=d), and an NIDD notification destination for the EES, as shown in Table 4 below.

**Table 4. EDN Configuration Information**

| **Information element** | | **Status** | **Description** |
|---|---|---|---|
| EDN connection information (NOTE 1) | | M | Information required by the UE to establish connection with the EDN. |
| > DNN/APN | | M | Data Network Name/Access Point Name |
| > S-NSSAI | | O | Network Slice information |
| > EDN Topological Service Area | | O | The EDN serves UEs that are connected to the Core Network from one of the cells included in this service area. See possible formats in Table 8.2.7-1 of TS 23.558. |
| List of EESs | | M | List of EESs of the EDN. |
| > EESID | | M | The identifier of the EES |
| > EES Endpoint | | M | The endpoint address (e.g. URI, IP address) of the EES |
| > EES NIDD RDS Port | | O | |
| > EES NIDD Notification Destination | | O | |
| > EASIDs (NOTE 2) | | O | List of EASIDs registered with the EES. |
| > ECSP info | | O | Information for Edge Computing Service Provider |
| > EES Topological Service Area | | O | The EES serves UEs that are connected to the Core Network from one of the cells included in this service area. EECs in UEs that are located outside this area shall not be served. See possible formats in Table 8.2.7-1 of TS 23.558. |
| > EES Geographical Service Area | | O | The area being served by the EES in Geographical values (as specified in clause 7.3.3.3 of TS 23.558) |
| > List of EES DNAI(s) | | O | DNAI(s) associated with the EES/EAS. This IE is used as Potential Locations of Applications in clause 5.6.7 of 3GPP TS 23.501. |
| > EES Service continuity support | | O | Indicates if the EES supports service continuity or not. This IE also indicates which ACR scenarios are supported by the EES. |
| Lifetime | | O | Time duration for which the EDN configuration information is valid and supposed to be cached in the EEC. |
| NOTE 1: | If the UE is provisioned or pre-configured with URSP rules by the HPLMN, the UE handles the precedence between EDN connection info and URSP rules as defined in TS 23.503 clause 6.1.2.2.1. EDN connection info is considered to be part of UE Local Configurations. | | |
| NOTE 2: | EAS information is limited to the EEC requested applications. If no AC profiles were present in the service provisioning request, the EAS information is subject to the ECSP policy (e.g. no EAS information or a subset of EAS information related to the EES). | | |

In an example, e.g., after receiving the service provisioning response, a select EES request may be transmitted to the ECS over NIDD using the NIDD RDS port for the ECS contained in the service provisioning response. The select EES request indicates an EES identifier of an EES selected from the one or more EESs. Then, a select EES response may be received from the ECS over NIDD.

In an example, an EEC registration request may be transmitted to the selected EES over NIDD using the NIDD RDS port for the selected EES. The EEC registration request may indicate the UE transport type of NIDD and the NIDD RDS port for the EEC. Then, an EEC registration response may be received from the selected EES over NIDD.

The EEC registration request and the EEC registration response will be further explained with reference to Fig. 7, which illustrates an EEC registration procedure according to an embodiment of the present disclosure. As shown, at 7.1, an EEC may send an EEC registration request to an EES. The EEC registration request may include an identifier (ID) of the EEC (e.g., EEC ID), security credentials of the EEC, a UE transport type of NIDD (e.g., UE Transport=nidd), an NIDD RDS port for the EEC (e.g., EEC NIDD RDS Port=b), and an AC profile (the AC Profile may be extended to include an NIDD RDS Port for an AC, e.g., AC NIDD RDS Port=a, referring to the above Table 3). Details of the information elements in the service registration request are shown in Table 5 below.

**Table 5. Service Registration Request**

| **Information element** | **Status** | **Description** |
|---|---|---|
| EECID | M | Unique identifier of the EEC. |
| UE Identifier | O | The identifier of the hosting UE (i.e. GPSI or identity token) |
| UE Transport | M | The transport protocol UE uses for communication |
| EEC NIDD RDS Port | O | When UE Transport is NIDD, this port is used by EEC for communication |
| Security credentials | M | Security credentials resulting from a successful authorization for the edge computing service. |
| AC Profile(s) | O | Profiles of ACs for which the EEC provides edge enabling services. AC Profiles are further described in Table 8.2.2-1 of TS 23.558. |
| EEC Service Continuity Support | O | Indicates if the EEC supports service continuity or not. The IE also indicates which ACR scenarios are supported by the EEC. |
| Proposed expiration time | O | Proposed expiration time for the registration. |
| EEC context ID | O | Identifier of the EEC context obtained from a previous registration. |
| Source EESID | O | Identifier of the EES that provided EEC context ID. |
| Source EES Endpoint | O | The endpoint address (e.g. URI, IP address) of the EES that provided EEC context ID. |

At 7.2, the EES may send a successful registration response. For example, the EEC registration response may include a registration ID for the EEC registration and a newly assigned EEC context ID.

In an example, e.g., after receiving the EEC registration response, an EAS discovery request may be transmitted to the selected EES over NIDD using the NIDD RDS port for the selected EES. Then, an EAS discovery response may be received from the selected EES over NIDD. The EAS discovery response may indicate, for each of one or more EASs, an NIDD RDS port and an EAS NIDD notification destination.

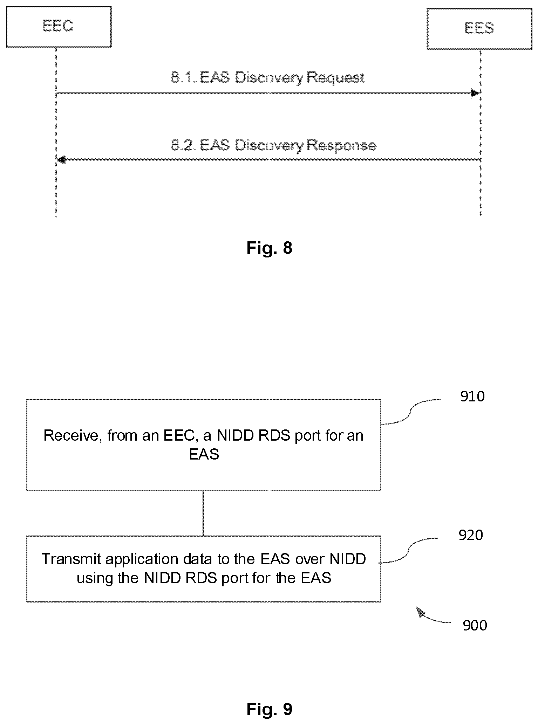

The EAS discovery request and the EAS discovery response will be further explained with reference to Fig. 8, which illustrates an EAS discovery procedure according to an embodiment of the present disclosure. As shown, at 8.1, the EEC may send an EAS discovery request to the EES. The EAS discovery request may include an identifier (ID) of the EEC (e.g., EECID) along with security credentials of the EEC. At 8.2, the EES may send a successful discovery response to the EES. The EAS discovery response may contain a list of EASs containing an EAS profile for each EAS. In an example, the EAS profile may be extended to include an EAS transport type (e.g., EAS Transport=nidd), an NIDD RDS port for the EAS (e.g., EAS NIDD RDS Port=e), and an EAS NIDD notification destination.

In an example, e.g., after receiving the EAS discovery response, a select EAS request may be transmitted to the selected EES over NIDD using the NIDD RDS port for the selected EES. The select EAS request may indicate an EAS identifier for an EAS selected from the one or more EASs. Then, a select EAS response may be received from the selected EES over NIDD. In an example, an NIDD RDS port for the selected EAS may be transmitted to the AC, e.g., over EDGE-5.

Fig. 9 is a flowchart illustrating a method 900 according to an embodiment of the present disclosure. The method can be performed by e.g., AC.

At block 910, an NIDD RDS port for an EAS is received from an EEC, e.g., over EDGE-5.

At block 920, application data is transmitted to the EAS over NIDD using the NIDD RDS port for the EAS.

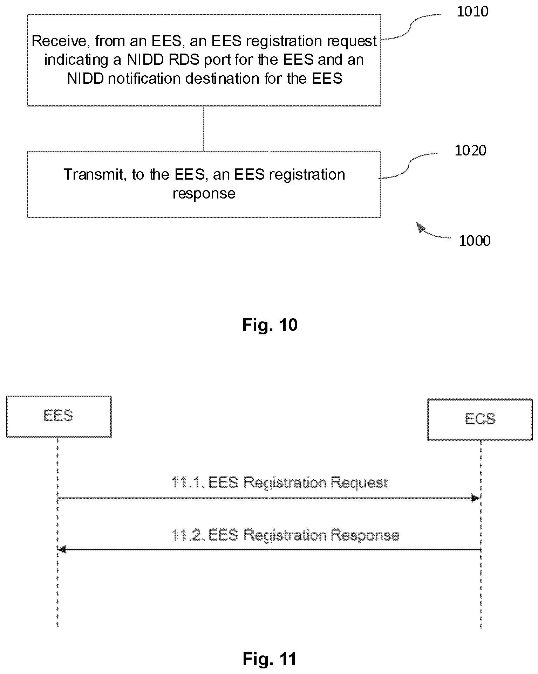

Fig. 10 is a flowchart illustrating a method 1000 according to an embodiment of the present disclosure. The method can be performed by e.g., ECS.

At block 1010, an EES registration request is received from an EES. The EES registration request indicates an NIDD RDS port for the EES and an NIDD notification destination for the EES.

At block 1020, an EES registration response is transmitted to the EES.

The EES registration request and the EES registration response will be further explained with reference to Fig. 11, which illustrates an EES registration procedure according to an embodiment of the present disclosure. As shown, at 11.1, an ECS may receive an EES registration request from an EES. The request may include a profile for the EES and security credentials for the EES. The profile for the EES may be extended to include an NIDD RDS port for the EES (e.g., EES NIDD RDS Port=d) and an NIDD notification destination for the EES (e.g., EES NIDD Notification Destination). Details of the information elements in the profile for the EES are shown in Table 6 below.

**Table 6. Profile for EES**

| **Information element** | **Status** | **Description** |
|---|---|---|
| EESID | M | The identifier of the EES |
| EES Endpoint | M | Endpoint information (e.g. URI, FQDN, IP address) used to communicate with the EES. This information is provided to the EEC to connect to the EES. |
| EES NIDD RDS Port | O | If EES supports NIDD transport, this port is used by EES for communication |
| EES NIDD Notification Destination | O | The endpoint URI to receive NIDD callbacks from SCEF. |
| EASIDs | M | List of EASIDs registered with the EES. |
| EES Provider Identifier | O | The identifier of the EES Provider (such as ECSP) |
| EES Topological Service Area | O | The EES serves UEs that are connected to the Core Network from one of the cells included in this service area. EECs in UEs that are located outside this area shall not be served. See possible formats in Table 8.2.7-1 of TS 23.558. |
| EES Geographical Service Area | O | The area being served by the EES in Geographical values (as specified in clause 7.3.3.3 of TS 23.558) |
| List of EES/EAS DNAI(s) | O | DNAI(s) associated with the EES/EAS. This IE is used as Potential Locations of Applications in clause 5.6.7 of 3GPP TS 23.501. |
| EES Service continuity support | O | Indicates if the EES supports service continuity or not. This IE also indicates which ACR scenarios are supported by the EES. |

At 11.2, the ECS may send to the EES a successful registration response, which may include an identifier for the EES registration.

In an example, a service provisioning request may be received from an EEC over NIDD. The service provisioning request may indicate an UE transport type of NIDD and an NIDD RDS port for the EEC. Then, a service provisioning response may be transmitted to the EEC over NIDD using the NIDD RDS port for the EEC. The service provisioning response may indicate, for each of one or more EESs, an NIDD RDS port and an NIDD notification destination. For further details, reference can be made to Steps 6.1 and 6.2 of Fig. 6 as described above.

In an example, a select EES request may be received from the EEC over NIDD. The select EES may indicate an EES identifier of an EES selected from the one or more EESs. For example, upon receiving the select EES request, an NIDD configuration request may be transmitted to an NEF or an SCEF. The NIDD configuration request may indicate an NIDD RDS port for the EEC, an NIDD RDS port for the selected EES, and an NIDD notification destination for the selected EES. Then, an NIDD configuration response may be received from the NEF or SCEF, and a select EES response may be transmitted to the EEC.

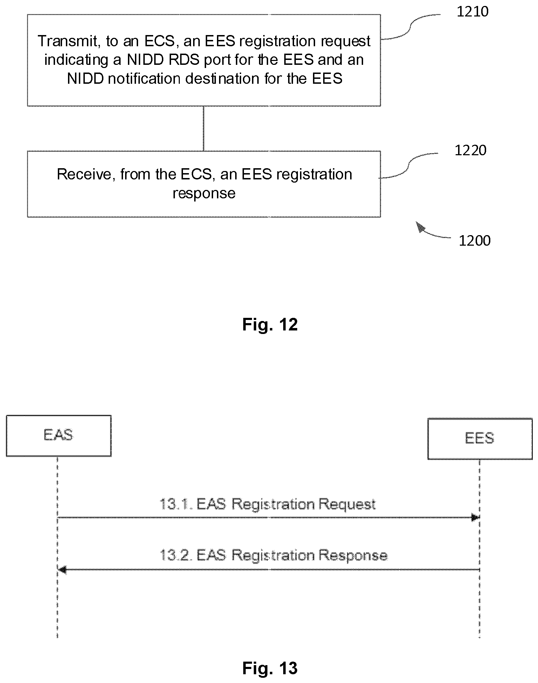

Fig. 12 is a flowchart illustrating a method 1200 according to an embodiment of the present disclosure. The method can be performed by e.g., EES.

At block 1210, an EES registration request is transmitted to an ECS. The EES registration request indicates an NIDD RDS port for the EES and an NIDD notification destination for the EES.

At block 1220, an EES registration response is received from the ECS.

For further details, reference can be made to Steps 11.1 and 11.2 of Fig. 11 as described above.

In an example, an EAS registration request may be received from an EAS. The EAS registration request may indicate an EAS transport type of NIDD, an NIDD RDS port for the EAS, and an NIDD notification destination for the EAS. Then, an EAS registration response may be transmitted to the EAS.

The EAS registration request and the EAS registration response will be further explained with reference to Fig. 13, which illustrates an EAS registration procedure according to an embodiment of the present disclosure. As shown, at 13.1, an EAS may send an EAS registration request to an EES. The request may include an EAS profile and security credentials of the EAS. In an example, the EAS profile may be extended to include an EAS transport type of NIDD (e.g., EAS Transport=nidd), an NIDD RDS port for the EAS (e.g., EAS NIDD RDS Port=e), and an NIDD notification destination for the EAS (e.g., EAS NIDD Notification Destination). Details of the information elements in the profile for the EAS are shown in Table 7 below.

**Table 7. Profile for EAS**

| **Information element** | **Status** | **Description** |
|---|---|---|
| EASID | M | The identifier of the EAS |
| EAS Endpoint | M | Endpoint information (e.g. URI, FQDN, IP address) used to communicate with the EAS. This information maybe discovered by EEC and exposed to ACs so that Acs can establish contact with the EAS. |
| ACID(s) | O | Identifies the AC(s) that can be served by the EAS |
| EAS Provider Identifier | O | The identifier of the EAS Provider |
| EAS Type | O | The category or type of EAS (e.g. V2X) |
| EAS Transport | M | The transport protocol EAS uses for communication |
| EAS NIDD RDS Port | O | When EAS Transport is NIDD, this port is used by EAS for communication |
| EAS NIDD Notification Destination | O | The endpoint URI to receive NIDD callbacks from SCEF. |
| EAS description | O | Human-readable description of the EAS |
| EAS Schedule | O | The availability schedule of the EAS (e.g. time windows) |
| EAS Geographical Service Area | O | The geographical service area that the EAS serves. ACs in UEs that are located outside that area shall not be served. |
| EAS Topological Service Area | O | The EAS serves UEs that are connected to the Core Network from one of the cells included in this service area. ACs in UEs that are located outside this area shall not be served. See possible formats in Table 8.2.7-1 of TS 23.558. |
| EAS Service KPIs | O | Service characteristics provided by EAS, detailed in Table 8.2.5-1 of TS 23.558 |
| EAS service permission level | O | Level of service permissions e.g. trial, gold-class supported by the EAS |
| EAS Feature(s) | O | Service features e.g. single vs. multi-player gaming service supported by the EAS |
| EAS Service continuity support | O | Indicates if the EAS supports service continuity or not. This IE also indicates which ACR scenarios are supported by the EAS. |
| List of EAS DNAI(s) | O | DNAI(s) associated with the EAS. This IE is used as Potential Locations of Applications in clause 5.6.7 of 3GPP TS 23.501. |
| | | It is a subset of the DNAI(s) associated with the EDN where the EAS resides. |
| List of N6 Traffic Routing requirements | O | The N6 traffic routing information and/or routing profile ID corresponding to each EAS DNAI. |
| EAS Availability Reporting Period | O | The availability reporting period (i.e. heartbeat period) that indicates to the EES how often it needs to check the EAS's availability after a successful registration. |
| EAS Required Service APIs | O | A list of the Service APIs that are required by the EAS |
| EAS Status | O | The status of the EAS (e.g. enabled, disabled, etc.) |

At 13.2, the EES may send to the EAS a successful registration response, which may include an identifier of the EAS registration.

In an example, an EEC registration request may be received from an EEC over NIDD. The EEC registration request may indicate an UE transport type of NIDD and an NIDD RDS port for the EEC. For example the EEC registration request may further indicate an NIDD RDS port for an AC. Then, an EEC registration response may be transmitted to the EEC. For further details, reference can be made to Steps 7.1 and 7.2 of Fig. 7 as described above.

In an example, an EAS discovery request may be received from the EEC over NIDD. The EAS discovery request may indicate an EEC identifier for the EEC. Then, an EAS discovery response may be transmitted to the EEC over NIDD.

The EAS discovery response may indicate, for each of one or more EASs, an NIDD RDS port and an EAS NIDD notification destination. For further details, reference can be made to Steps 8.1 and 8.2 of Fig. 8 as described above.

In an example, a select EAS request may be received from the EEC over NIDD. The select EAS request may indicate an EAS identifier for an EAS selected from the one or more EASs. For example, upon receiving the select EAS request, an NIDD configuration request may be transmitted to an NEF or an SCEF. The NIDD configuration request may indicate an NIDD RDS port for an AC, an NIDD RDS port for the EAS, and an NIDD notification destination for the EAS. Then, an NIDD configuration response may be received from the NEF or SCEF, and a select EAS response may be transmitted to the EEC over NIDD.

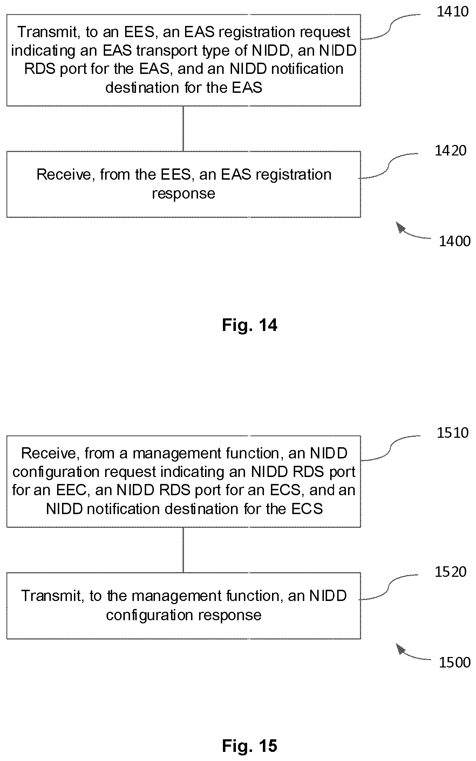

Fig. 14 is a flowchart illustrating a method 1400 according to an embodiment of the present disclosure. The method can be performed by e.g., EAS.

At block 1410, an EAS registration request is transmitted to an EES. The EAS registration request indicates an EAS transport type of NIDD, an NIDD RDS port for the EAS, and an NIDD notification destination for the EAS.

At block 1420, an EAS registration response is received from the EES.

For further details, reference can be made to Steps 13.1 and 13.2 of Fig. 13 as described above.

Fig. 15 is a flowchart illustrating a method 1500 according to an embodiment of the present disclosure. The method can be performed by e.g., an NEF or SCEF.

At block 1510, an NIDD configuration request is received from a management function. The NIDD configuration request indicates an NIDD RDS port for an EEC, an NIDD RDS port for an ECS, and an NIDD notification destination for the ECS.

At block 1520, an NIDD configuration response is transmitted to the management function.

For further details, reference can be made to Steps 4.1 and 4.2 of Fig. 4 as described above.

In an example, an NIDD configuration request may be received from the ECS. The NIDD configuration request may indicate the NIDD RDS port for the EEC, an NIDD RDS port for the EES, and an NIDD notification destination for the EES. Then, an NIDD configuration response may be transmitted to the ECS.

In an example, an NIDD configuration request may be received from the EES. The NIDD configuration request may indicate an NIDD RDS port for an AC, an NIDD RDS port for the EAS, and an NIDD notification destination for the EAS. Then, an NIDD configuration response may be transmitted to the ECS.

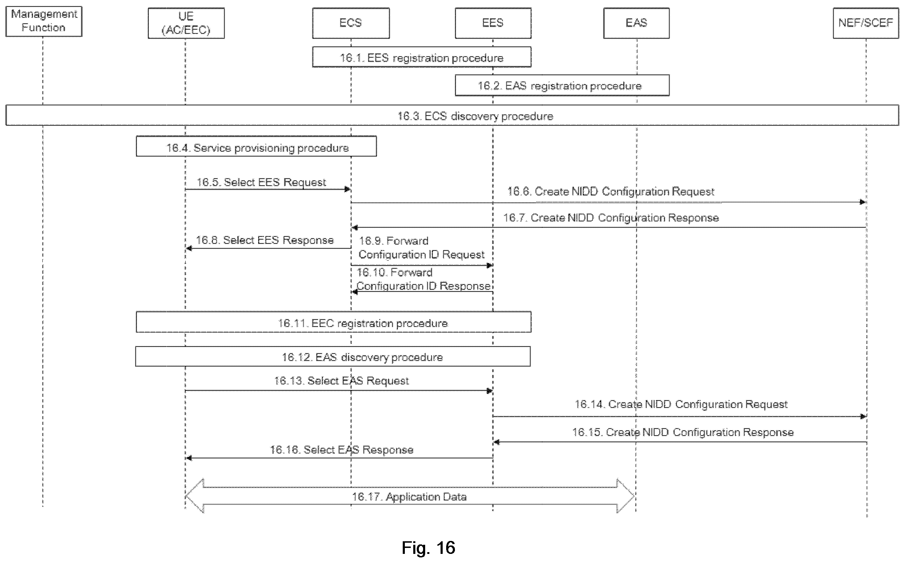

The above methods 300, 500, 900, 1000, 1200, 1400, and 1500 will be explained in further detail below with reference to Fig 16, which illustrates an end-to-end procedure for NIDD communication in EDGEAPP according to an embodiment of the present disclosure.

At 16.1, an EES initiates an EES registration procedure as described above in connection with Fig. 11. At 16.2, an EAS initiates an EAS registration procedure as described above in connection with Fig. 13. At 16.3, a management function initiates an ECS discovery procedure as described above in connection with Fig. 4. Then, the NIDD configuration between the EEC and the ECS is created, thereby enabling NIDD communication between them.

At 16.4, an EEC initiates a service provisioning procedure as described above in connection with Fig. 6. At 16.5, the EEC calls an ECS to select one of the EESs known from the service provisioning procedure by specifying an identifier of the EES selected from the EESs. At 16.6, the ECS calls an NEF/SCEF to create an NIDD configuration to enable NIDD communication between the EEC and the selected EES. The request may include, for example, an identifier of the ECS (e.g., scsAsld), an identifier of a UE hosting the EEC (e.g., MSISDN/externalId), an EEC NIDD RDS Port (rdsPort.portUE=EEC NIDD RDS Port), an EES NIDD RDS Port (rdsPort.portSCEF=EES NIDD RDS Port), and an EES NIDD Notification Destination. At 16.7, the NEF/SCEF sends a successful response to the ECS. At 16.8, the ECS sends a successful response to the EEC. Then, the NIDD configuration between the EEC and the EES is created, thereby enabling NIDD communication between them.

At 16.9, the ECS forwards an identifier of the configuration (e.g., configurationld) to the EES together with the identifier of the selected EEC (e.g., EEC ID). At 16.10, the EEC confirms the reception of the identifier of the configuration. At 16.11, the EEC initiates an EEC registration procedure as described above in connection with Fig. 7. At 16.12, the EEC initiates an EAS discovery procedure as described above in connection with Fig. 8. At 16.13, the EEC calls the EES to select one of the EASs known from the EAS discovery procedure by specifying the identifier of the selected EAS. At 16.14, the EES calls the NEF/SCEF to create an NIDD configuration to enable NIDD communication between the AC and the selected EAS. The request may include, for example, an identifier of the EES (e.g., scsAsld), an identifier of the UE (e.g., MSISDN/externalld), an AC NIDD RDS Port (rdsPort.portUE=AC NIDD RDS Port), an EAS NIDD RDS Port (rdsPort.portSCEF=EAS NIDD RDS Port), and EAS NIDD Notification Destination. At 16.15, the NEF/SCEF sends a successful response to the ECS. At 16.16, the EES sends a successful response to the EEC.

Then, the NIDD configuration between the AC and the selected EAS is created, thereby enabling NIDD communication between them. At 16.17, the AC can transmit/receive application data to/from the selected EAS.

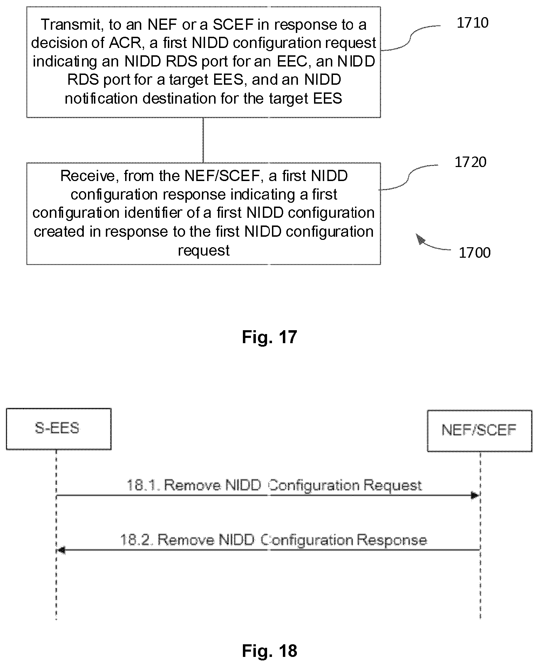

Fig. 17 is a flowchart illustrating a method 1700 according to an embodiment of the present disclosure. The method can be performed by e.g., a source EES in a Automated Application Context Relocation (ACR) procedure.

At block 1710, a first NIDD configuration request is transmitted to an NEF or an SCEF in response to a decision of ACR. The first NIDD configuration request indicates an NIDD RDS port for an EEC, an NIDD RDS port for a target EES, and an NIDD notification destination for the target EES.

At block 1720, a first NIDD configuration response is received from the NEF/SCEF. The first NIDD configuration response indicates a first configuration identifier of a first NIDD configuration created in response to the first NIDD configuration request.

In an example, a second NIDD configuration request may be transmitted to the NEF/SCEF. The second NIDD configuration request may indicate an NIDD RDS port for an AC, an NIDD RDS port for a target EAS, and an NIDD notification destination for the target EAS. Then, a second NIDD configuration response may be received from the NEF/SCEF. The second NIDD configuration response may indicate a second configuration identifier of a second NIDD configuration created in response to the second NIDD configuration request.

In an example, when the ACR has been completed, a request for removing a third NIDD configuration for NIDD communication between the EEC and the source EES may be transmitted to the NEF/SCEF. For example, the request may indicate a third configuration identifier of the third NIDD configuration. Then, a response indicating removal of the third NIDD configuration may be received from the NEF/SCEF. This will be further explained with reference to Fig. 18, which illustrates a procedure for removing NIDD configuration according to an embodiment of the present disclosure. As shown, at 18.1, an EES may send a remove NIDD configuration request containing an identifier of the configuration to an NEF/SCEF. At 18.2, the NEF/SCEF may send a successful response to the EES. Then, the NIDD configuration for NIDD communication between the EEC and the source EES can be removed.

In an example, a request for removing a fourth NIDD configuration for NIDD communication between the AC and a source EAS may be transmitted to the NEF/SCEF. The request may indicate a fourth configuration identifier of the fourth NIDD configuration. Then, a response indicating removal of the fourth NIDD configuration may be received from the NEF/SCEF. The procedure shown in Fig. 18 also applies here. Then, the NIDD configuration for NIDD communication between the AC and the source EAS can be removed.

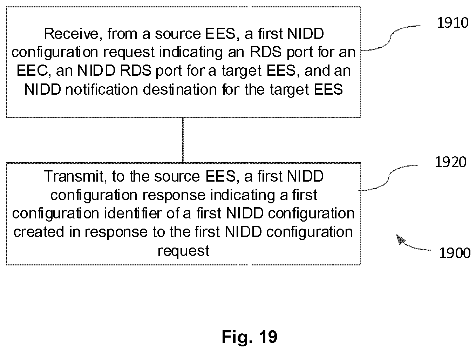

Fig. 19 is a flowchart illustrating a method 1900 according to an embodiment of the present disclosure. The method can be performed by e.g., an NEF or SCEF.

At block 1910, a first NIDD configuration request is received from a source EES. The first NIDD configuration request indicates an RDS port for an EEC, an NIDD RDS port for a target EES, and an NIDD notification destination for the target EES.

At block 1920, a first NIDD configuration response is transmitted to the source EES. The first NIDD configuration response indicates a first configuration identifier of a first NIDD configuration created in response to the first NIDD configuration request.

In an example, a second NIDD configuration request may be received from the source EES. The second NIDD configuration request may indicate an NIDD RDS port for an AC, an NIDD RDS port for a target EAS, and an NIDD notification destination for the target EAS. For example, a second NIDD configuration response may be transmitted to the source EES. The second NIDD configuration response may indicate a second configuration identifier of a second NIDD configuration created in response to the second NIDD configuration request.

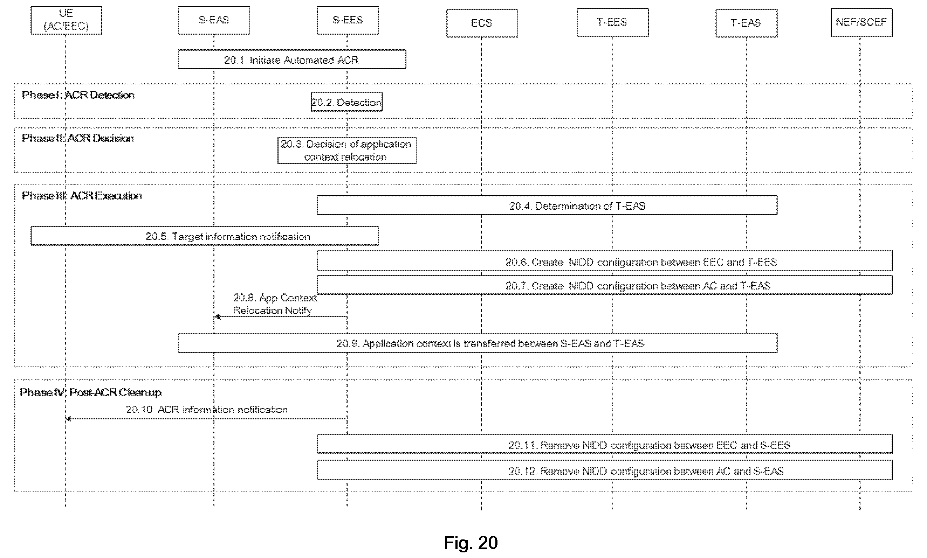

The methods 1700 and 1900 will be explained in further detail below with reference to Fig 20, which illustrates an automated ACR procedure according to an embodiment of the present disclosure.

At 20.1, a source EAS (S-EAS) initiates an automated ACR with a source EES (S-EES). In this step, the S-EAS and S-EES negotiate an address for storing an Application Context. The S-EAS stores the Application Context at this address which can be further accessed by the S-EES when ACR is required. At 20.2, the S-EES detects that ACR may be triggered. The detection may be based on 3GPP Monitoring Events (e.g., a change in location). At 20.3, the S-EES decides to execute ACR in response to the detection. At 20.4, the S-EES determines a target EES (T-EES) and a target EAS (T-EAS) via a T-EAS discovery procedure. At 20.5, the S-EES sends the target information notification to an EEC. At 20.6, the S-EES calls an NEF/SCEF to create an NIDD configuration to enable NIDD communication between the EEC and the T-EES (referring to the first NIDD notification in the methods 1700 and 1900). At 20.7, the S-EES calls the NEF/SCEF to create an NIDD configuration to enable NIDD communication between the AC and the T-EAS (referring to the second NIDD notification in the methods 1700 and 1900). At 20.8, the S-EES sends an ACR Notify message to the S-EAS to initiate ACR between the S-EAS and the T-EAS. At 20.9, the Application Context is transferred from S-EAS to the T-EAS at implementation specific time. At 20.10, the S-EES sends an ACR information notification message to the EEC to confirm that the ACR has been completed. At 20.11, the S-EES calls the NEF/SCEF to remove the NIDD configuration between the EEC and the S-EES, as described above in connection with Fig. 18. At 20.12, the S-EES calls the NEF/SCEF to remove the NIDD configuration between the AC and the S-EAS, as described above in connection with Fig. 18.

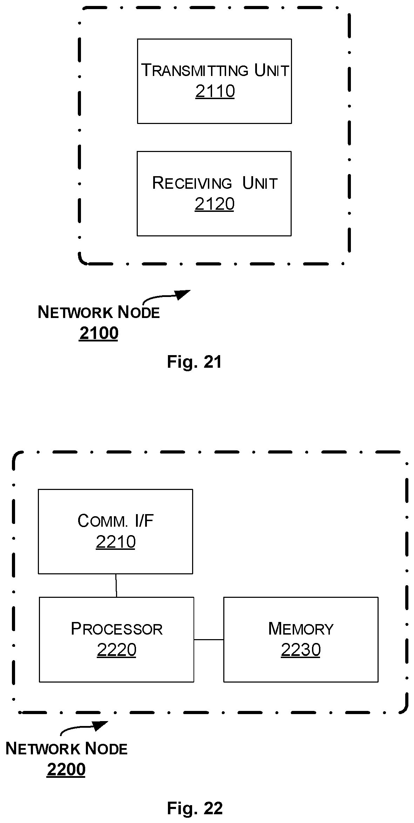

Correspondingly to the method 300, 1000, 1200, 1400, and 1500 as described above, a network node is provided. Fig. 21 is a block diagram of a network node 2100 according to an embodiment of the present disclosure.

The network node 2100 can implement a management function and can be configured to perform the method 300 as described above in connection with Fig. 3. As shown in Fig. 21, the network node 2100 includes a transmitting unit 2110 configured to transmit, to an NEF or an SCEF, an NIDD configuration request indicating an NIDD RDS port for an EEC, an NIDD RDS port for an ECS, and an NIDD notification destination for the ECS. The network node 2100 further includes a receiving unit 2120 configured to receive, from the NEF or SCEF, an NIDD configuration response. The transmitting unit 2110 is further configured to transmit, to the EEC, ECS configuration information indicating the NIDD RDS port for the ECS.

Alternatively, the network node 2100 can implement an ECS and can be configured to perform the method 1000 as described above in connection with Fig. 10. As shown in Fig. 21, the network node 2100 includes a receiving unit 2120 configured to receive, from an EES, an EES registration request indicating an NIDD RDS, port for the EES and an NIDD notification destination for the EES. The network node 2100 further includes a transmitting unit 2110 configured to transmit, to the EES, an EES registration response.

In an embodiment, the receiving unit 2120 may be further configured to receive, from an EEC, over NIDD, a service provisioning request indicating an UE transport type of NIDD and an NIDD RDS port for the EEC. In an embodiment, the transmitting unit 2110 may be further configured to transmit, to the EEC over NIDD using the NIDD RDS port for the EEC, a service provisioning response indicating, for each of one or more EESs, an NIDD RDS port.

In an embodiment, the receiving unit 2120 may be further configured to receive, from the EEC over NIDD, a select EES request indicating an EES identifier of an EES selected from the one or more EESs. In an embodiment, the transmitting unit 2110 may be further configured to transmit, to an NEF or an SCEF, an NIDD configuration request indicating an NIDD RDS port for the EEC, an NIDD RDS port for the selected EES, and an NIDD notification destination for the selected EES. In an embodiment, the receiving unit 2120 may be further configured to receive, from the NEF or SCEF, an NIDD configuration response. In an embodiment, the transmitting unit 2110 may be further configured to transmit, to the EEC, a select EES response.

Alternatively, the network node 2100 can implement an EES and can be configured to perform the method 1200 as described above in connection with Fig. 12. As shown in Fig. 21, the network node 2100 includes a transmitting unit 2110 configured to transmit, to an ECS, an EES registration request indicating an NIDD RDS port for the EES and an NIDD notification destination for the EES. The network node 2100 further includes a receiving unit 2120 configured to receive, from the ECS, an EES registration response.

In an embodiment, the receiving unit 2120 may be further configured to receive, from an EAS, an EAS registration request indicating an EAS transport type of NIDD, an NIDD RDS port for the EAS, and an NIDD notification destination for the EAS. In an embodiment, the transmitting unit 2110 may be further configured to transmit, to the EAS, an EAS registration response.

In an embodiment, the receiving unit 2120 may be further configured to receive, from an EEC over NIDD, an EEC registration request indicating an UE transport type of NIDD and an NIDD RDS port for the EEC. In an embodiment, the transmitting unit 2110 may be further configured to transmit, to the EEC, an EEC registration response.

In an embodiment, the EEC registration request may further indicate an NIDD RDS port for an AC.

In an embodiment, the receiving unit 2120 may be further configured to receive, from the EEC over NIDD, an EAS discovery request indicating an EEC identifier for the EEC. In an embodiment, the transmitting unit 2110 may be further configured to transmit, to the EEC over NIDD, an EAS discovery response indicating, for each of one or more EASs, an NIDD RDS port and an EAS NIDD notification destination.

In an embodiment, the receiving unit 2120 may be further configured to receive, from the EEC over NIDD, a select EAS request indicating a EAS identifier for an EAS selected from the one or more EASs. In an embodiment, the transmitting unit 2110 may be further configured to transmit, to an NEF or an SCEF, an NIDD configuration request indicating an NIDD RDS port for an AC, an NIDD RDS port for the EAS, and an NIDD notification destination for the EAS. In an embodiment, the receiving unit 2120 may be further configured to receive, from the NEF or SCEF, an NIDD configuration response. In an embodiment, the transmitting unit 2110 may be further configured to transmit, to the EEC over NIDD, a select EAS response.

Alternatively, the network node 2100 can implement an EAS and can be configured to perform the method 1400 as described above in connection with Fig. 14. As shown in Fig. 21, the network node 2100 includes a transmitting unit 2110 configured to transmit, to an EES, an EAS registration request indicating an EAS transport type of NIDD, an NIDD RDS port for the EAS, and an NIDD notification destination for the EAS. The network node 2100 further includes a receiving unit 2120 configured to receive, from the EES, an EAS registration response.

Alternatively, the network node 2100 can implement an NEF or SCEF and can be configured to perform the method 1500 as described above in connection with Fig. 15. As shown in Fig. 21, the network node 2100 includes a receiving unit 2120 configured to receive, from a management function, an NIDD configuration request indicating an NIDD RDS port for an EEC, an NIDD RDS port for an ECS, and an NIDD notification destination for the ECS. The network node 2100 further includes a transmitting unit 2110 configured to transmit, to the management function, an NIDD configuration response.

In an embodiment, the receiving unit 2120 is further configured to receive, from the ECS, an NIDD configuration request indicating the NIDD RDS port for the EEC, an NIDD RDS port for the EES, and an NIDD notification destination for the EES. In an embodiment, the transmitting unit 2110 is further configured to transmit, to the ECS, an NIDD configuration response.

In an embodiment, the receiving unit 2120 is further configured to receive, from the EES, an NIDD configuration request indicating an NIDD RDS port for an AC, an NIDD RDS port for the EAS, and an NIDD notification destination for the EAS. In an embodiment, the transmitting unit 2110 is further configured to transmit, to the ECS, an NIDD configuration response.

Alternatively, the network node 2100 can implement a source EES and can be configured to perform the method 1700 as described above in connection with Fig. 17. As shown in Fig. 21, the network node 2100 includes a transmitting unit 2110 configured to transmit, to an NEF or an SCEF in response to a decision of ACR, a first NIDD configuration request indicating an NIDD RDS port for an EEC, an NIDD RDS port for a target EES, and an NIDD notification destination for the target EES. The network node 2100 further includes a receiving unit 2120 configured to receive, from the NEF/SCEF, a first NIDD configuration response indicating a first configuration identifier of a first NIDD configuration created in response to the first NIDD configuration request.

In an embodiment, the transmitting unit 2110 may be further configured to transmit, to the NEF/SCEF, a second NIDD configuration request indicating an NIDD RDS port for an AC, an NIDD RDS port for a target EAS, and an NIDD notification destination for the target EAS. In an embodiment, the receiving unit 2120 may be further configured to receive, from the NEF/SCEF, a second NIDD configuration response indicating a second configuration identifier of a second NIDD configuration created in response to the second NIDD configuration request.

In an embodiment, when the ACR has been completed, the transmitting unit 2110 may be further configured to transmit, to the NEF/SCEF, a request for removing a third NIDD configuration for NIDD communication between the EEC and the source EES, the request indicating a third configuration identifier of the third NIDD configuration. In an embodiment, when the ACR has been completed, the receiving unit 2120 may be further configured to receive, from the NEF/SCEF, a response indicating removal of the third NIDD configuration.

In an embodiment, when the ACR has been completed, the transmitting unit 2110 may be further configured to transmit, to the NEF/SCEF, a request for removing a fourth NIDD configuration for NIDD communication between the AC and a source EAS, the request indicating a fourth configuration identifier of the fourth NIDD configuration. In an embodiment, when the ACR has been completed, the receiving unit 2120 may be further configured to receive, from the NEF/SCEF, a response indicating removal of the fourth NIDD configuration.

Alternatively, the network node 2100 can implement an NEF or SCEF and can be configured to perform the method 1900 as described above in connection with Fig. 19. As shown in Fig. 21, the network node 2100 includes a receiving unit 2120 configured to receive, from a source EES, a first NIDD configuration request indicating an RDS port for an EEC, an NIDD RDS port for a target EES, and an NIDD notification destination for the target EES. The network node 2100 further includes a transmitting unit 2110 configured to transmit, to the source EES, a first NIDD configuration response indicating a first configuration identifier of a first NIDD configuration created in response to the first NIDD configuration request.

In an embodiment, the receiving unit 2120 may be further configured to receive, from the source EES, a second NIDD configuration request indicating an NIDD RDS port for an AC, an NIDD RDS port for a target EAS, and an NIDD notification destination for the target EAS. In an embodiment, the transmitting unit 2110 may be further configured to transmit, to the source EES, a second NIDD configuration response indicating a second configuration identifier of a second NIDD configuration created in response to the second NIDD configuration request.

The units 2110-2120 can be implemented as a pure hardware solution or as a combination of software and hardware, e.g., by one or more of: a processor or a micro-processor and adequate software and memory for storing the software, a Programmable Logic Device (PLD) or other electronic component(s) or processing circuitry configured to perform the actions described above, and illustrated, e.g., in Fig. 3, 10, 12, 14, 17, 19, or 25.

Fig. 22 is a block diagram of a network node 2200 according to another embodiment of the present disclosure.

The network node 2200 includes a communication interface 2210, a processor 2220 and a memory 2230.

As an example, the memory 2230 can contain instructions executable by the processor 2220 whereby the network node 2200 is operative to, when implementing a management function, perform the actions, e.g., of the process described earlier in conjunction with Fig. 3. Particularly, the memory 2230 can contain instructions executable by the processor 2220 whereby the network node 2200 is operative to, when implementing a management function: transmit, to an NEF or an SCEF, an NIDD configuration request indicating an NIDD Reliable Data Service (RDS) port for an EEC, an NIDD RDS port for an ECS, and an NIDD notification destination for the ECS; receive, from the NEF or SCEF, an NIDD configuration response; and transmitting, to the EEC, ECS configuration information indicating the NIDD RDS port for the ECS.

Alternatively, the memory 2230 can contain instructions executable by the processor 2220 whereby the network node 2200 is operative to, when implementing an ECS, perform the actions, e.g., of the process described earlier in conjunction with Fig. 10. Particularly, the memory 2230 can contain instructions executable by the processor 2220 whereby the network node 2200 is operative to, when implementing an ECS: receive, from an EES, an EES registration request indicating an NIDD RDS port for the EES and an NIDD notification destination for the EES; and transmit, to the EES, an EES registration response.

In an example, the memory 2230 can further contain instructions executable by the processor 2220 whereby the network node 2200 is operative to when implementing the ECS: receive, from an EEC, over NIDD, a service provisioning request indicating an UE transport type of NIDD and an NIDD RDS port for the EEC; and transmit, to the EEC over NIDD using the NIDD RDS port for the EEC, a service provisioning response indicating, for each of one or more EESs, an NIDD RDS port.

In an example, the memory 2230 can further contain instructions executable by the processor 2220 whereby the network node 2200 is operative to when implementing the ECS: receive, from the EEC over NIDD, a select EES request indicating an EES identifier of an EES selected from the one or more EESs; transmit, to an NEF or an SCEF, an NIDD configuration request indicating an NIDD RDS port for the EEC, an NIDD RDS port for the selected EES, and an NIDD notification destination for the selected EES; receive, from the NEF or SCEF, an NIDD configuration response; and transmit, to the EEC, a select EES response.

Alternatively, the memory 2230 can contain instructions executable by the processor 2220 whereby the network node 2200 is operative to, when implementing an EES, perform the actions, e.g., of the process described earlier in conjunction with Fig. 12. Particularly, the memory 2230 can contain instructions executable by the processor 2220 whereby the network node 2200 is operative to, when implementing an EES: transmit, to an ECS, an EES registration request indicating an NIDD RDS port for the EES and an NIDD notification destination for the EES; receive, from the ECS, an EES registration response.

In an example, the memory 2230 can further contain instructions executable by the processor 2220 whereby the network node 2200 is operative to when implementing the EES: receive, from an EAS, an EAS registration request indicating an EAS transport type of NIDD, an NIDD RDS port for the EAS, and an NIDD notification destination for the EAS; and transmit, to the EAS, an EAS registration response.

In an example, the memory 2230 can further contain instructions executable by the processor 2220 whereby the network node 2200 is operative to when implementing the EES: receive, from an EEC over NIDD, an EEC registration request indicating an UE transport type of NIDD and an NIDD RDS port for the EEC; and transmit, to the EEC, an EEC registration response.

In an embodiment, the EEC registration request may further indicate an NIDD RDS port for an AC.

In an example, the memory 2230 can further contain instructions executable by the processor 2220 whereby the network node 2200 is operative to when implementing the EES: receive, from the EEC over NIDD, an EAS discovery request indicating an EEC identifier for the EEC; and transmit, to the EEC over NIDD, an EAS discovery response indicating, for each of one or more EASs, an NIDD RDS port and an EAS NIDD notification destination.

In an example, the memory 2230 can further contain instructions executable by the processor 2220 whereby the network node 2200 is operative to when implementing the EES: receive, from the EEC over NIDD, a select EAS request indicating a EAS identifier for an EAS selected from the one or more EASs; transmit, to an NEF or an SCEF, an NIDD configuration request indicating an NIDD RDS port for an AC, an NIDD RDS port for the EAS, and an NIDD notification destination for the EAS; receive, from the NEF or SCEF, an NIDD configuration response; and transmit, to the EEC over NIDD, a select EAS response.

Alternatively, the memory 2230 can contain instructions executable by the processor 2220 whereby the network node 2200 is operative to, when implementing an EAS, perform the actions, e.g., of the process described earlier in conjunction with Fig. 14. Particularly, the memory 2230 can contain instructions executable by the processor 2220 whereby the network node 2200 is operative to, when implementing an EAS: transmit, to an EES, an EAS registration request indicating an EAS transport type of NIDD, an NIDD RDS port for the EAS, and an NIDD notification destination for the EAS; and receive, from the EES, an EAS registration response.

Alternatively, the memory 2230 can contain instructions executable by the processor 2220 whereby the network node 2200 is operative to, when implementing an NEF or SCEF, perform the actions, e.g., of the process described earlier in conjunction with Fig. 15. Particularly, the memory 2230 can contain instructions executable by the processor 2220 whereby the network node 2200 is operative to, when implementing an NEF or SCEF: receive, from a management function, an NIDD configuration request indicating an NIDD RDS port for an EEC, an NIDD RDS port for an ECS, and an NIDD notification destination for the ECS; and transmit, to the management function, an NIDD configuration response.

In an example, the memory 2230 can further contain instructions executable by the processor 2220 whereby the network node 2200 is operative to when implementing the NEF or SCEF: receive, from the ECS, an NIDD configuration request indicating the NIDD RDS port for the EEC, an NIDD RDS port for the EES, and an NIDD notification destination for the EES; and transmit, to the ECS, an NIDD configuration response.

In an example, the memory 2230 can further contain instructions executable by the processor 2220 whereby the network node 2200 is operative to when implementing the NEF or SCEF: receive, from the EES, an NIDD configuration request indicating an NIDD RDS port for an AC, an NIDD RDS port for the EAS, and an NIDD notification destination for the EAS; and transmit, to the ECS, an NIDD configuration response.

Alternatively, the memory 2230 can contain instructions executable by the processor 2220 whereby the network node 2200 is operative to, when implementing a source EES, perform the actions, e.g., of the process described earlier in conjunction with Fig. 17. Particularly, the memory 2230 can contain instructions executable by the processor 2220 whereby the network node 2200 is operative to, when implementing a source EES: transmit, to an NEF or an SCEF in response to a decision of ACR, a first NIDD configuration request indicating an NIDD RDS port for an EEC, an NIDD RDS port for a target EES, and an NIDD notification destination for the target EES; and receive, from the NEF/SCEF, a first NIDD configuration response indicating a first configuration identifier of a first NIDD configuration created in response to the first NIDD configuration request.

In an example, the memory 2230 can further contain instructions executable by the processor 2220 whereby the network node 2200 is operative to when implementing the source EES: transmit, to the NEF/SCEF, a second NIDD configuration request indicating an NIDD RDS port for an AC, an NIDD RDS port for a target EAS, and an NIDD notification destination for the target EAS; and receive, from the NEF/SCEF, a second NIDD configuration response indicating a second configuration identifier of a second NIDD configuration created in response to the second NIDD configuration request.

In an example, the memory 2230 can further contain instructions executable by the processor 2220 whereby the network node 2200 is operative to when implementing the source EES: when the ACR has been completed, transmit, to the NEF/SCEF, a request for removing a third NIDD configuration for NIDD communication between the EEC and the source EES, the request indicating a third configuration identifier of the third NIDD configuration; and receive, from the NEF/SCEF, a response indicating removal of the third NIDD configuration.

In an example, the memory 2230 can further contain instructions executable by the processor 2220 whereby the network node 2200 is operative to when implementing the source EES: when the ACR has been completed, transmit, to the NEF/SCEF, a request for removing a fourth NIDD configuration for NIDD communication between the AC and a source EAS, the request indicating a fourth configuration identifier of the fourth NIDD configuration; and receive, from the NEF/SCEF, a response indicating removal of the fourth NIDD configuration.

Alternatively, the memory 2230 can contain instructions executable by the processor 2220 whereby the network node 2200 is operative to, when implementing an NEF or SCEF, perform the actions, e.g., of the process described earlier in conjunction with Fig. 19. Particularly, the memory 2230 can contain instructions executable by the processor 2220 whereby the network node 2200 is operative to, when implementing an NEF or SCEF: receive, from a source EES, a first NIDD configuration request indicating an RDS port for an EEC, an NIDD RDS port for a target EES, and an NIDD notification destination for the target EES; and transmit, to the source EES, a first NIDD configuration response indicating a first configuration identifier of a first NIDD configuration created in response to the first NIDD configuration request.

In an example, the memory 2230 can further contain instructions executable by the processor 2220 whereby the network node 2200 is operative to when implementing the NEF or SCEF: receive, from the source EES, a second NIDD configuration request indicating an NIDD RDS port for an AC, an NIDD RDS port for a target EAS, and an NIDD notification destination for the target EAS; and transmit, to the source EES, a second NIDD configuration response indicating a second configuration identifier of a second NIDD configuration created in response to the second NIDD configuration request.

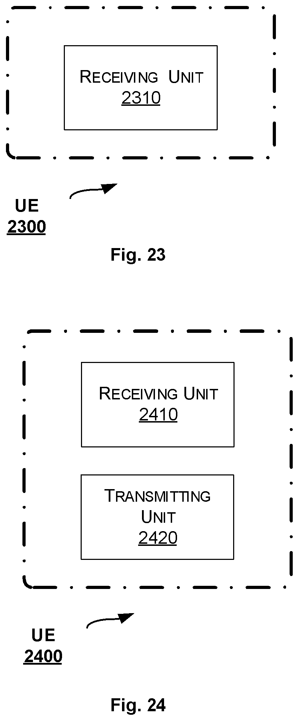

Correspondingly to the method 500 as described above, an UE is provided. Fig. 23 is a block diagram of an UE 2300 according to an embodiment of the present disclosure.

The UE 2300 can implement an EEC and can be configured to perform the method 500 as described above in connection with Fig. 5. As shown in Fig. 23, the UE 2300 includes a receiving unit 2310 configured to receive, from a management function, ECS configuration information indicating an NIDD RDS port for an ECS.

In an example, the UE 2300 may further include a transmitting unit configured to transmit, to the ECS over NIDD using the NIDD RDS port for the ECS, a service provisioning request indicating an UE transport type of NIDD and an NIDD RDS port for the EEC. In an example, the receiving unit 2310 may be further configured to receive from the ECS over NIDD, a service provisioning response indicating, for each of one or more EESs, an NIDD RDS port.

In an embodiment, the transmitting unit may be further configured to transmit, to the ECS over NIDD using the NIDD RDS port for the ECS, a select EES request indicating an EES identifier of an EES selected from the one or more EESs. In an embodiment, the receiving unit 2310 may be further configured to receive, from the ECS over NIDD, a select EES response.

In an embodiment, the transmitting unit may be further configured to transmit, to the selected EES over NIDD using the NIDD RDS port for the selected EES, an EEC registration request indicating the UE transport type of NIDD and the NIDD RDS port for the EEC. In an embodiment, the receiving unit 2310 may be further configured to receive, from the selected EES over NIDD, an EEC registration response.

In an embodiment, the EEC registration request may further indicate an NIDD RDS port for an AC.

In an embodiment, the transmitting unit may be further configured to transmit, to the selected EES over NIDD using the NIDD RDS port for the selected EES, an EAS discovery request. In an embodiment, the receiving unit 2310 may be further configured to receive, from the selected EES over NIDD, an EAS discovery response indicating, for each of one or more EASs, an NIDD RDS port and an EAS NIDD notification destination.

In an embodiment, the transmitting unit may be further configured to transmit, to the selected EES over NIDD using the NIDD RDS port for the selected EES, a select EAS request indicating an EAS identifier for an EAS selected from the one or more EASs. In an embodiment, the receiving unit 2310 may be further configured to receive, from the selected EES over NIDD, a select EAS response.

In an embodiment, the transmitting unit may be further configured to transmit, to the AC, an NIDD RDS port for the selected EAS.

The unit 2310 can be implemented as a pure hardware solution or as a combination of software and hardware, e.g., by one or more of: a processor or a micro-processor and adequate software and memory for storing the software, a PLD or other electronic component(s) or processing circuitry configured to perform the actions described above, and illustrated, e.g., in Fig. 5.

Correspondingly to the method 900 as described above, an UE is provided. Fig. 24 is a block diagram of an UE 2400 according to an embodiment of the present disclosure.

The UE 2400 can implement an AC and can be configured to perform the method 900 as described above in connection with Fig. 9. As shown in Fig. 24, the UE 2400 includes a receiving unit 2410 configured to receive, from an EEC, an NIDD RDS port for an EAS. The UE 2400 further includes a transmitting unit 2420 configured to transmit application data to the EAS over NIDD using the NIDD RDS port for the EAS.

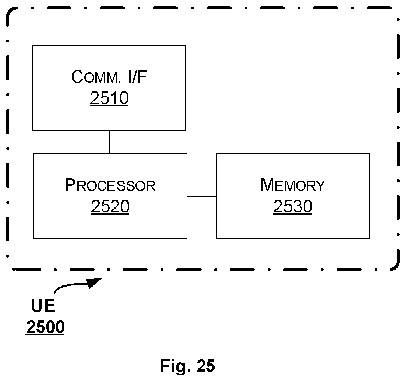

Fig. 25 is a block diagram of an UE 2500 according to another embodiment of the present disclosure.

The UE 2500 includes a communication interface 2510, a processor 2520 and a memory 2530.

As an example, the memory 2530 can contain instructions executable by the processor 2520 whereby the UE 2500 is operative to, when implementing an EEC, perform the actions, e.g., of the process described earlier in conjunction with Fig. 5. Particularly, the memory 2530 can contain instructions executable by the processor 2520 whereby the UE 2500, when implementing an EEC, is operative to: receive, from a management function, ECS configuration information indicating an NIDD RDS port for an ECS.

In an embodiment, the memory 2530 can further contain instructions executable by the processor 2520 whereby the UE 2500 is operative to, when implementing the EEC: transmit, to the ECS over NIDD using the NIDD RDS port for the ECS, a select EES request indicating an EES identifier of an EES selected from the one or more EESs; and receive, from the ECS over NIDD, a select EES response.

In an embodiment, the memory 2530 can further contain instructions executable by the processor 2520 whereby the UE 2500 is operative to, when implementing the EEC: transmit, to the selected EES over NIDD using the NIDD RDS port for the selected EES, an EEC registration request indicating the UE transport type of NIDD and the NIDD RDS port for the EEC; and receive, from the selected EES over NIDD, an EEC registration response.

In an embodiment, the EEC registration request may further indicate an NIDD RDS port for an AC.

In an embodiment, the memory 2530 can further contain instructions executable by the processor 2520 whereby the UE 2500 is operative to, when implementing the EEC: transmit, to the selected EES over NIDD using the NIDD RDS port for the selected EES, an EAS discovery request; and receive, from the selected EES over NIDD, an EAS discovery response indicating, for each of one or more EASs, an NIDD RDS port and an EAS NIDD notification destination.

In an embodiment, the memory 2530 can further contain instructions executable by the processor 2520 whereby the UE 2500 is operative to, when implementing the EEC: transmit, to the selected EES over NIDD using the NIDD RDS port for the selected EES, a select EAS request indicating an EAS identifier for an EAS selected from the one or more EASs; and receive, from the selected EES over NIDD, a select EAS response.

In an embodiment, the memory 2530 can further contain instructions executable by the processor 2520 whereby the UE 2500 is operative to, when implementing the EEC: transmit, to the AC, an NIDD RDS port for the selected EAS.

Alternatively, the memory 2530 can contain instructions executable by the processor 2520 whereby the UE 2500 is operative to, when implementing an AC, perform the actions, e.g., of the process described earlier in conjunction with Fig. 9. Particularly, the memory 2530 can contain instructions executable by the processor 2520 whereby the UE 2500, when implementing an AC, is operative to: receive, from an EEC, an NIDD RDS port for an EAS; and transmitting application data to the EAS over NIDD using the NIDD RDS port for the EAS.

The present disclosure also provides at least one computer program product in the form of a non-volatile or volatile memory, e.g., a non-transitory computer readable storage medium, an Electrically Erasable Programmable Read-Only Memory (EEPROM), a flash memory and a hard drive. The computer program product includes a computer program. The computer program includes: code/computer readable instructions, which when executed by a processor of a network node, configure the network node to, when implementing a management function, perform the actions, e.g., of the process described earlier in conjunction with Fig. 3, or when implementing an ECS, perform the actions, e.g., of the process described earlier in conjunction with Fig. 10, or when implementing an EES, perform the actions, e.g., of the process described earlier in conjunction with Fig. 12, or when implementing an EAS, perform the actions, e.g., of the process described earlier in conjunction with Fig. 14, or when implementing an NEF or an SCEF, perform the actions, e.g., of the process described earlier in conjunction with Fig. 15 or 19, or when implementing a source EES, perform the actions, e.g., of the process described earlier in conjunction with Fig. 17, or when executed by a processor of an UE, configure the UE to, when implementing an EEC, perform the actions, e.g., of the process described earlier in conjunction with Fig. 5, or when implementing an AC, perform the actions, e.g., of the process described earlier in conjunction with Fig. 9.

The computer program product may be configured as a computer program code structured in computer program modules. The computer program modules could essentially perform the actions of the flow illustrated in Fig. 3, 5, 9, 10, 12, 14, 15, 17, or 19.

The processor may be a single CPU (Central Processing Unit), but could also comprise two or more processing units. For example, the processor may include general purpose microprocessors; instruction set processors and/or related chips sets and/or special purpose microprocessors such as Application Specific Integrated Circuits (ASICs). The processor may also comprise board memory for caching purposes. The computer program may be carried by a computer program product connected to the processor. The computer program product may comprise a non-transitory computer readable storage medium on which the computer program is stored. For example, the computer program product may be a flash memory, a Random-Access Memory (RAM), a Read-Only Memory (ROM), or an EEPROM, and the computer program modules described above could in alternative embodiments be distributed on different computer program products in the form of memories.

The disclosure has been described above with reference to embodiments thereof. It should be understood that various modifications, alternations and additions can be made by those skilled in the art without departing from the scope of the disclosure. Therefore, the scope of the disclosure is not limited to the above particular embodiments but only defined by the claims as attached.

## Claims

1. A method (300) in a management function, comprising:
transmitting (310), to a Network Exposure Function, NEF, or a Service Capability Exposure Function, SCEF, a Non-Internet Protocol Data Delivery, NIDD, configuration request indicating an NIDD Reliable Data Service, NIDD RDS, port for an Edge Enabler Client, EEC, an NIDD RDS port for an Edge Configuration Server, ECS, and an NIDD notification destination for the ECS;
receiving (320), from the NEF or SCEF, an NIDD configuration response; and
transmitting (330), to the EEC, ECS configuration information indicating the NIDD RDS port for the ECS.

2. A method (500) in an Edge Enabler Client, EEC, comprising:
receiving (510), from a management function, Edge Configuration Server, ECS, configuration information indicating a Non-Internet Protocol Data Delivery Reliable Data Service, NIDD RDS port for an ECS;
transmitting, to the ECS over NIDD using the NIDD RDS port for the ECS, a service provisioning request indicating a User Equipment, UE, transport type of NIDD and an NIDD RDS port for the EEC; and
receiving, from the ECS over NIDD, a service provisioning response indicating, for each of one or more Edge Enabler Servers, EESs, an NIDD RDS port.

3. The method (500) of claim 2, further comprising:
transmitting, to the ECS over NIDD using the NIDD RDS port for the ECS, a select EES request indicating an EES identifier of an EES selected from the one or more EESs; and
receiving, from the ECS over NIDD, a select EES response.

4. The method (500) of claim 3, further comprising:
transmitting, to the selected EES over NIDD using the NIDD RDS port for the selected EES, an EEC registration request indicating the UE transport type of NIDD and the NIDD RDS port for the EEC; and
receiving, from the selected EES over NIDD, an EEC registration response.

5. The method (500) of claim 4, wherein the EEC registration request further indicates an NIDD RDS port for an Application Client, AC.

6. The method (500) of claim 4 or 5, further comprising:
transmitting, to the selected EES over NIDD using the NIDD RDS port for the selected EES, an Edge Application Server, EAS, discovery request; and
receiving, from the selected EES over NIDD, an EAS discovery response indicating, for each of one or more EASs, an NIDD RDS port and an EAS NIDD notification destination.

7. The method (500) of claim 6, further comprising:
transmitting, to the selected EES over NIDD using the NIDD RDS port for the selected EES, a select EAS request indicating an EAS identifier for an EAS selected from the one or more EASs; and
receiving, from the selected EES over NIDD, a select EAS response.

8. The method (500) of claim 7, further comprising:
transmitting, to the AC, an NIDD RDS port for the selected EAS.

9. A method (900) in an Application Client, AC, comprising:
receiving (910), from an Edge Enabler Client, EEC, a Non-Internet Protocol Data Delivery Reliable Data Service, NIDD RDS, port for an Edge Application Server, EAS; and
transmitting (920) application data to the EAS over NIDD using the NIDD RDS port for the EAS.

10. A method (1000) in an Edge Configuration Server, ECS, comprising:
receiving (1010), from an Edge Enabler Server, EES, an EES registration request indicating a Non-Internet Protocol Data Delivery, NIDD, Reliable Data Service, RDS, port for the EES and an NIDD notification destination for the EES; and
transmitting (1020), to the EES, an EES registration response.

11. A method (1500) in a Network Exposure Function, NEF, or a Service Capability Exposure Function, SCEF, comprising:
receiving (1510), from a management function, an Non-Internet Protocol Data Delivery, NIDD, configuration request indicating an NIDD Reliable Data Service, RDS, port for an Edge Enabler Client, EEC, an NIDD RDS port for an Edge Configuration Server, ECS, and an NIDD notification destination for the ECS; and
transmitting (1520), to the management function, an NIDD configuration response.

12. A network node (2200), comprising a communication interface (2210), a processor (2220) and a memory (2230), the memory (2230) comprising instructions executable by the processor (2220) whereby the network node (2200) is operative to, when implementing a management function, perform the method (300) according to claim 1.

13. A User Equipment, UE, (2500), comprising a communication interface (2510), a processor (2520) and a memory (2530), the memory (2530) comprising instructions executable by the processor (2520) whereby the UE (2500) is operative to, when implementing an Edge Enabler Client, EEC, perform the method (500) according to any of claims 2-8, or, when implementing an Application Client, AC, perform the method (900) according to claim 9.

14. A computer-readable storage medium having computer-readable instructions stored thereon, the computer-readable instructions, when executed by a processor of a User Equipment, UE, configure the UE to, when implementing an Edge Enabler Client, EEC, perform the method (500) according to any of claims 2-8, or when implementing an Application Client, AC, perform the method (900) according to claim 9.

## Patentansprüche

1. Ein Verfahren (300) in einer Verwaltungsfunktion, das Folgendes beinhaltet:
Übertragen (310), an eine Network Exposure Function, NEF, oder eine Service Capability Exposure Function, SCEF, einer Non-Internet-Protocol-Data-Delivery-Konfigurationsanforderung, NIDD-Konfigurationsanforderung, die einen NIDD-Reliable-Data-Service-Port, NIDD-RDS-Port, für einen Edge-Enabler-Client, EEC, einen NIDD-RDS-Port für einen Edge-Configuration-Server, ECS, und ein NIDD-Benachrichtigungsziel für den ECS angibt;
Empfangen (320), von der NEF oder SCEF, einer NIDD-Konfigurationsantwort; und
Übertragen (330), an den EEC, von ECS-Konfigurationsinformationen, die den NIDD-RDS-Port für den ECS angeben.

2. Ein Verfahren (500) in einem Edge-Enabler Client, EEC, das Folgendes beinhaltet:
Empfangen (510), von einer Verwaltungsfunktion, von Edge-Configuration-Server-Konfigurationsinformationen, ECS-Konfigurationsinformationen, die einen Non-Internet-Protocol-Data-Delivery-Reliable-Data-Service-Port, NIDD-RDS-Port, für einen ECS angeben;
Übertragen, an den ECS über NIDD unter Verwendung des NIDD-RDS-Ports für den ECS, einer Dienstbereitstellungsanforderung, die einen Benutzergerät-NIDD-Transporttyp, UE-NIDD-Transporttyp, und einen NIDD-RDS-Port für den EEC angibt;
und
Empfangen, von dem ECS über NIDD, einer Dienstbereitstellungsantwort, die für jeden von einem oder mehreren Edge-Enabler-Servern, EESs, einen NIDD-RDS-Port angibt.

3. Verfahren (500) gemäß Anspruch 2, das ferner Folgendes beinhaltet:
Übertragen, an den ECS über NIDD unter Verwendung des NIDD-RDS-Ports für den ECS, einer EES-Auswahlanforderung, die eine EES-Kennung eines aus dem einen oder den mehreren EESs ausgewählten EES angibt; und
Empfangen, von dem ECS über NIDD, einer EES-Auswahlantwort.

4. Verfahren (500) gemäß Anspruch 3, das ferner Folgendes beinhaltet:
Übertragen, an den ausgewählten EES über NIDD unter Verwendung des NIDD-RDS-Ports für den ausgewählten EES, einer EEC-Registrierungsanforderung, die den UE-NIDD-Transporttyp und den NIDD-RDS-Port für den EEC angibt; und
Empfangen, von dem ausgewählten EES über NIDD, einer EEC-Registrierungsantwort.

5. Verfahren (500) gemäß Anspruch 4, wobei die EEC-Registrierungsanforderung ferner einen NIDD-RDS-Port für einen Application-Client, AC, angibt.

6. Verfahren (500) gemäß Anspruch 4 oder 5, das ferner Folgendes beinhaltet:
Übertragen, an den ausgewählten EES über NIDD unter Verwendung des NIDD-RDS-Ports für den ausgewählten EES, einer Edge-Application-Server-Discovery-Anforderung, EAS- Discovery-Anforderung; und
Empfangen, von dem ausgewählten EES über NIDD, einer EAS-Discovery-Antwort, die für jeden von einem oder mehreren EASs einen NIDD-RDS-Port und ein EAS-NIDD-Benachrichtigungsziel angibt.

7. Verfahren (500) gemäß Anspruch 6, das ferner Folgendes beinhaltet:
Übertragen, an den ausgewählten EES über NIDD unter Verwendung des NIDD-RDS-Ports für den ausgewählten EES, einer EAS-Auswahlanforderung, die eine EAS-Kennung für einen aus dem einen oder den mehreren EASs ausgewählten EAS angibt; und
Empfangen, von dem ausgewählten EES über NIDD, einer EAS-Auswahlantwort.

8. Verfahren (500) gemäß Anspruch 7, das ferner Folgendes beinhaltet:
Übertragen, an den AC, eines NIDD-RDS-Ports für den ausgewählten EAS.

9. Ein Verfahren (900) in einem Application-Client, AC, das Folgendes beinhaltet:
Empfangen (910), von einem Edge-Enabler-Client, EEC, eines Non-Internet-Protocol-Data-Delivery-Reliable-Data-Service-Ports, NIDD-RDS-Ports, für einen Edge-Application-Server, EAS; und
Übertragen (920) von Anwendungsdaten an den EAS über NIDD unter Verwendung des NIDD-RDS-Ports für den EAS.

10. Ein Verfahren (1000) in einem Edge-Configuration-Server, ECS, das Folgendes beinhaltet:
Empfangen (1010), von einem Edge-Enabler-Server, EES, einer EES-Registrierungsanforderung, die einen Non-Internet-Protocol-Data-Delivery-Reliable-Data-Service-Port, NIDD-RDS-Port, für den EES und ein NIDD-Benachrichtigungsziel für den EES angibt; und
Übertragen (1020), an den EES, einer EES-Registrierungsantwort.

11. Ein Verfahren (1500) in einer Network Exposure Function, NEF, oder einer Service Capability Exposure Function, SCEF, das Folgendes beinhaltet:
Empfangen (1510), von einer Verwaltungsfunktion, einer Non-Internet-Protocol-Data-Delivery-Konfigurationsanforderung, NIDD-Konfigurationsanforderung, die einen NIDD-Reliable-Data-Service-Port, NIDD-RDS-Port, für einen Edge-Enabler-Client, EEC, einen NIDD-RDS-Port für einen Edge-Configuration-Server, ECS, und ein NIDD-Benachrichtigungsziel für den ECS angibt; und
Übertragen (1520), an die Verwaltungsfunktion, einer NIDD-Konfigurationsantwort.

12. Ein Netzwerkknoten (2200), der eine Kommunikationsschnittstelle (2210), einen Prozessor (2220) und einen Speicher (2230) beinhaltet, wobei der Speicher (2230) Anweisungen beinhaltet, die durch den Prozessor (2220) ausführbar sind, wodurch der Netzwerkknoten (2200) betriebsfähig ist, das Verfahren (300) gemäß Anspruch 1 durchzuführen, wenn er eine Verwaltungsfunktion implementiert.

13. Ein Benutzergerät, UE, (2500), das eine Kommunikationsschnittstelle (2510), einen Prozessor (2520) und einen Speicher (2530) beinhaltet, wobei der Speicher (2530) Anweisungen beinhaltet, die durch den Prozessor (2520) ausführbar sind, wodurch das UE (2500) betriebsfähig ist, das Verfahren (500) gemäß einem der Ansprüche 2-8 durchzuführen, wenn es einen Edge-Enabler-Client, EEC, implementiert, oder das Verfahren (900) gemäß Anspruch 9 durchzuführen, wenn es einen Application-Client, AC, implementiert.

14. Ein computerlesbares Speichermedium, auf dem computerlesbare Anweisungen gespeichert sind, wobei die computerlesbaren Anweisungen bei Ausführung durch einen Prozessor eines Benutzergeräts, UE, das UE konfigurieren, das Verfahren (500) gemäß einem der Ansprüche 2-8 durchzuführen, wenn es einen Edge-Enabler-Client, EEC, implementiert, oder das Verfahren (900) gemäß Anspruch 9 durchzuführen, wenn es einen Application-Client, AC, implementiert.

## Revendications

1. Un procédé (300) dans une fonction de gestion, comprenant :
la transmission (310), à une fonction d'exposition de réseau, NEF (« Network Exposure Function »), ou à une fonction d'exposition des capacités de service, SCEF (« Service Capability Exposure Function »), d'une demande de configuration de livraison de données sans protocole Internet, NIDD (« Non-Internet Protocol Data Delivery »),
indiquant un port de service de données fiables (« RDS, Reliable Data Service ») NIDD, RDS NIDD, pour un client activateur de périphérie, EEC (« Edge Enabler Client »), un port RDS NIDD pour un serveur de configuration de périphérie, ECS (« Edge Configuration Server »), et une destination de notification NIDD pour l'ECS ;
la réception (320), en provenance de la NEF ou de la SCEF, d'une réponse de configuration NIDD ; et
la transmission (330), à l'EEC, d'informations de configuration d'ECS indiquant le port RDS NIDD pour l'ECS.

2. Un procédé (500) dans un client activateur de périphérie, EEC, comprenant :
la réception (510), en provenance d'une fonction de gestion, d'informations de configuration de serveur de configuration de périphérie, ECS, indiquant un port de service de données fiables de livraison de données sans protocole Internet, RDS NIDD, pour un ECS ;
la transmission, à l'ECS sur NIDD en utilisant le port RDS NIDD pour l'ECS, d'une demande de provisionnement de service indiquant un type de transport d'équipement d'utilisateur, UE (« User Equipment »), de NIDD et un port RDS NIDD pour l'EEC ; et
la réception, en provenance de l'ECS sur NIDD, d'une réponse de provisionnement de service indiquant, pour chacun d'un ou plusieurs serveurs activateurs de périphérie, EES (« Edge Enabler Server »), un port RDS NIDD.

3. Le procédé (500) de la revendication 2, comprenant en outre :
la transmission, à l'ECS sur NIDD en utilisant le port RDS NIDD pour l'ECS, d'une demande de sélectionner EES (« select EES ») indiquant un identifiant d'EES d'un EES sélectionné parmi les un ou plusieurs EES ; et
la réception, en provenance de l'ECS sur NIDD, d'une réponse à sélectionner EES.

4. Le procédé (500) de la revendication 3, comprenant en outre :
la transmission, à l'EES sélectionné sur NIDD en utilisant le port RDS NIDD pour l'EES sélectionné, d'une demande d'enregistrement d'EEC indiquant le type de transport d'UE de NIDD et le port RDS NIDD pour l'EEC ; et
la réception, en provenance de l'EES sélectionné sur NIDD, d'une réponse d'enregistrement d'EEC.

5. Le procédé (500) de la revendication 4, dans lequel la demande d'enregistrement d'EEC indique en outre un port RDS NIDD pour un client d'application, AC (« Application Client »).

6. Le procédé (500) de la revendication 4 ou de la revendication 5, comprenant en outre :
la transmission, à l'EES sélectionné sur NIDD en utilisant le port RDS NIDD pour l'EES sélectionné, d'une demande de découverte de serveur d'application de périphérie, EAS (« Edge Application Server ») ; et
la réception, en provenance de l'EES sélectionné sur NIDD, d'une réponse de découverte EAS indiquant, pour chacun d'un ou plusieurs EAS, un port RDS NIDD et une destination de notification EAS NIDD.

7. Le procédé (500) de la revendication 6, comprenant en outre :
la transmission, à l'EES sélectionné sur NIDD en utilisant le port RDS NIDD pour l'EES sélectionné, d'une demande de sélectionner EAS (« select EAS ») indiquant un identifiant d'EAS pour un EAS sélectionné parmi les un ou plusieurs EAS ; et
la réception, en provenance de l'EES sélectionné sur NIDD, d'une réponse à sélectionner EAS.

8. Le procédé (500) de la revendication 7, comprenant en outre :
la transmission, à l'AC, d'un port RDS NIDD pour l'EAS sélectionné.

9. Un procédé (900) dans un client d'application, AC, comprenant :
la réception (910), en provenance d'un client activateur de périphérie, EEC, d'un port de service de données fiables de livraison de données sans protocole Internet, RDS NIDD, pour un serveur d'application de périphérie, EAS ; et
la transmission (920) de données d'application à l'EAS sur NIDD en utilisant le port RDS NIDD pour l'EAS.

10. Un procédé (1000) dans un serveur de configuration de périphérie, ECS, comprenant :
la réception (1010), en provenance d'un serveur activateur de périphérie, EES, d'une demande d'enregistrement EES indiquant un port de service de données fiables, RDS, de livraison de données sans protocole Internet, NIDD, pour l'EES et une destination de notification NIDD pour l'EES ; et
la transmission (1020), à l'EES, d'une réponse d'enregistrement EES.

11. Un procédé (1500) dans une fonction d'exposition de réseau, NEF, ou une fonction d'exposition des capacités de service, SCEF, comprenant :
la réception (1510), en provenance d'une fonction de gestion, d'une demande de configuration de livraison de données sans protocole Internet, NIDD, indiquant un port de service de données fiables, RDS, NIDD pour un client activateur de périphérie, EEC, un port RDS NIDD pour un serveur de configuration de périphérie, ECS, et une destination de notification NIDD pour l'ECS ; et
la transmission (1520), à la fonction de gestion, d'une réponse de configuration NIDD.

12. Un nœud de réseau (2200), comprenant une interface de communication (2210), un processeur (2220) et une mémoire (2230), la mémoire (2230) comprenant des instructions exécutables par le processeur (2220) moyennant quoi le nœud de réseau (2200) est opérationnel pour, lors de la mise en œuvre d'une fonction de gestion, effectuer le procédé (300) selon la revendication 1.

13. Un équipement d'utilisateur, UE, (2500), comprenant une interface de communication (2510), un processeur (2520) et une mémoire (2530), la mémoire (2530) comprenant des instructions exécutables par le processeur (2520) moyennant quoi l'UE (2500) est opérationnel pour, lors de la mise en œuvre d'un client activateur de périphérie, EEC, effectuer le procédé (500) selon n'importe lesquelles des revendications 2 à 8, ou, lors de la mise en œuvre d'un client d'application, AC, effectuer le procédé (900) selon la revendication 9.

14. Un support de stockage lisible par ordinateur ayant des instructions lisibles par ordinateur stockées sur celui-ci, les instructions lisibles par ordinateur, lorsqu'elles sont exécutées par un processeur d'un équipement d'utilisateur, UE, configurent l'UE pour, lors de la mise en œuvre d'un client activateur de périphérie, EEC, effectuer le procédé (500) selon n'importe lesquelles des revendications 2 à 8, ou lors de la mise en œuvre d'un client d'application, AC, effectuer le procédé (900) selon la revendication 9.
